(19) Europäisches Patentamt
European Patent Office
Office européen des brevets

(11) **EP 3 020 055 B1**

(12) **FASCICULE DE BREVET EUROPEEN**

(45) Date de publication et mention
de la délivrance du brevet:
**11.10.2017 Bulletin 2017/41**

(21) Numéro de dépôt: **14739376.3**

(22) Date de dépôt: **07.07.2014**

(51) Int Cl.:
*H01F 41/02* (2006.01)    *H01F 1/08* (2006.01)

(86) Numéro de dépôt international:
**PCT/EP2014/064434**

(87) Numéro de publication internationale:
**WO 2015/004054 (15.01.2015 Gazette 2015/02)**

(54) **AIMANT FRITTE ANNULAIRE A AIMANTATION RADIALE, PRESENTANT UNE TENUE MECANIQUE RENFORCEE**

GESINTERTER RINGMAGNET MIT RADIALER MAGNETISIERUNG, AUFWEISEND EIN VERSTÄRKTES MECHANISCHES VERHALTEN

SINTERED RING MAGNET WITH RADIAL MAGNETIZATION, SHOWING REINFORCED MECHANICAL STABILITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.07.2013 FR 1356706**

(43) Date de publication de la demande:
**18.05.2016 Bulletin 2016/20**

(73) Titulaire: **Commissariat à l'Énergie Atomique et aux Énergies Alternatives**
**75015 Paris (FR)**

(72) Inventeurs:
• DELETTE, Gérard
  **38100 Grenoble (FR)**
• LARGILLER, Grégory
  **38400 Saint Martin d'Hères (FR)**
• LUCA, Sorana
  **38220 Vizille (FR)**
• SERVANT, Florence
  **38410 Vaulnaveys Le Haut (FR)**

(74) Mandataire: **Brevalex**
**95, rue d'Amsterdam**
**75378 Paris Cedex 8 (FR)**

(56) Documents cités:
EP-A1- 1 354 653     WO-A1-94/14175
DE-U1-202005 019 268   JP-A- H07 161 512
US-A1- 2005 034 788

**Description**

**DOMAINE TECHNIQUE**

La présente invention a trait aux aimants frittés de géométrie annulaire et à aimantation radiale. Ces aimants sont préférentiellement mis en forme par injection de poudres (de l'anglais « Powder Injection Molding » ou « PIM »), ou par compression à froid de poudres, ou encore par toute autre technique connue permettant de mettre en forme des pièces à partir de poudre.

L'invention s'applique à tous les domaines techniques requérant l'utilisation de tels aimants annulaires à aimantation radiale, par exemple au domaine des moteurs électriques.

De façon conventionnelle, il est entendu par « aimantation radiale » une aimantation selon la direction radiale (mesurée ponctuellement), répartie suivant une symétrie de révolution autour de la périphérie de l'aimant de forme annulaire. Autrement dit, en tous points de la périphérie de l'aimant de forme annulaire, le champ magnétique présente une orientation radiale.

**ETAT DE LA TECHNIQUE ANTERIEURE**

Les aimants à hautes performances à base de terres rares tels que R-Fe-B et R-(Co, Fe) (où R désigne au moins un élément de la famille des terres rares), ainsi que les hexaferrites du type (Sr, Ba)-Fe-O, sont habituellement produits par des procédés de métallurgie des poudres, comprenant différentes étapes principales.

Tout d'abord, il est procédé à la synthèse de poudres avec des grains de taille micrométrique possédant la composition désirée.

Ensuite, il est mis en oeuvre le moulage d'ébauches poreuses par injection ou par compression de ces poudres, puis il est procédé au frittage qui permet d'obtenir des pièces de haute densité.

A l'issue du frittage, les pièces sont éventuellement rectifiées pour atteindre les dimensions visées et, dans certains cas, sont revêtues pour les protéger de l'oxydation. Elles sont finalement aimantées sous champ magnétique afin d'acquérir une induction magnétique rémanente $B_r$ ainsi qu'un produit énergétique maximal $(BH)_{max}$ qui sont deux caractéristiques de la performance de l'aimant, à une température donnée.

Les techniques de mise en forme les plus couramment utilisées pour le moulage des ébauches sont la compression à froid de poudres sèches ou de pâtes, ou encore le moulage par injection (PIM). Ces techniques de métallurgie des poudres combinées à une consolidation par frittage permettent la production d'une grande variété de composants métalliques et céramiques.

La compression de poudres sèches peut s'effectuer par pressage en matrice (pressage uniaxial) ou par pressage isostatique, dit pressage CIF pour « Compaction Isostatique à Froid ». Dans les deux cas, une faible quantité de lubrifiant, habituellement inférieure à 5% en masse, est ajoutée à la poudre qui est compactée sous forte pression, par exemple entre 500 à 5000 bar. A l'issue du pressage, la pièce présente une porosité de l'ordre de 20 à 50%. Une variante de ce procédé consiste à préparer une pâte qui est un mélange de la poudre et de composés organiques et/ou minéraux, puis de réaliser le moulage par pressage en matrice de cette pâte. A l'issue du pressage, les phases organiques/minérales sont éliminées par un traitement chimique ou thermique de déliantage, laissant place à une porosité de 20 à 50% au sein de l'ébauche.

La technique de moulage par injection est couramment utilisée pour la réalisation de divers objets de forme complexe en grande série. Dans un tel procédé, la première étape consiste à obtenir un mélange-maître (de l'anglais "feedstock") adapté à l'application visée. Les mélanges-maîtres sont constitués d'un mélange de matière organique (ou liant polymérique), qui est un vecteur pour l'injection, et de poudres inorganiques (métalliques ou céramiques). Ensuite, le mélange-maître s'injecte comme un matériau thermoplastique.

Après démoulage, la pièce est déliantée par des traitements thermiques ou chimiques afin de retirer les phases organiques qui laissent place à une porosité de 20 à 50% dans l'ébauche. Des méthodes de préparation d'un tel mélange-maître sont connues de l'homme du métier.

Comme évoqué ci-dessus, les techniques les plus couramment mises en oeuvre sont la compression à froid et le moulage par injection de poudres, mais d'autres procédés sont possibles (coulage en bande, sérigraphie, impression par jet d'encre, compaction par dépression sous vide désigné par « PressLess Process » ou PLP).

Quelle que soit la technique de mise en forme retenue pour les ébauches, leur élaboration peut se faire en combinant la mise en forme de poudre et l'application d'un champ magnétique de manière à orienter les particules de poudres selon une direction privilégiée.

La densification des ébauches poreuses est réalisée par un frittage à haute température, habituellement supérieure à 1000°C, mais toujours inférieure à la température de fusion de la phase principale constitutive du matériau. Cette consolidation, également dénommée frittage, est effectuée par des traitements thermique au sein de fours fonctionnant sous une atmosphère adaptée au type de composé utilisé.

Habituellement, la densification de la pièce se produit lors du traitement thermique opéré à l'aide de rampes anisothermes et de paliers de maintien à température constante, dont les caractéristiques individuelles (durées, niveaux) et l'enchaînement sont très précisément ajustés en fonction de la nuance du matériau. Les traitements thermiques sont notamment adaptés au taux de densification ainsi qu'à la microstructure attendus. Pour cette raison, il est en général très difficile de réaliser un frittage simultané de deux matériaux de composition différente, en appliquant le même traitement thermique. Lorsque les incompatibilités de frittage sont surmontées, il peut être possible de consolider des structures multi-matériaux en un seul traitement par co-frittage. Toutefois, des phénomènes d'inter-diffusion chimique entre les matériaux subsistent et peuvent conduire à des pollutions chimiques qui seraient rédhibitoires dans le cas d'aimants co-frittés avec un matériau différent.

En fin de traitement thermique de frittage, la pièce est refroidie jusqu'à la température ambiante et subit donc une contraction dont l'amplitude dépend des valeurs du coefficient d'expansion thermique. La pièce frittée est de nature polycristalline, c'est-à-dire qu'elle est constituée de grains cristallographiques (cristallites de quelques microns) fortement liées et issues des particules de la poudre initiale dont ils conservent l'orientation cristallographique.

Finalement, la pièce frittée est aimantée par application d'un champ magnétique orienté selon une direction donnée, repérée par rapport à la pièce. Le champ d'aimantation est créé à l'aide d'un dispositif électromagnétique spécifique appelé aimanteur.

La valeur du champ rémanent $B_r$ de l'aimant qui résulte de l'aimantation de la pièce polycristalline frittée dépend d'une part de la composition chimique qui fixe la valeur de la polarisation à saturation ($J_s$) et, d'autre part, du degré d'anisotropie magnétique D de l'aimant. La valeur du champ rémanent dans une direction donnée, $B_r$, d'un aimant peut-être mesurée précisément par des techniques expérimentales connues de l'homme du métier (à l'aide d'un équipement appelé hystérésigraphe par exemple). Il en est de même pour la valeur de la polarisation à saturation $J_s$ qui est déterminée par la phase magnétique dont est constitué l'aimant.

Ces trois dernières grandeurs physiques sont reliées par la formule suivante :

$$B_r = J_s \times D \times \left[ \frac{\rho}{\rho_0} (1 - \alpha) \right]^{2/3}$$

Dans cette relation, p désigne la densité de l'aimant, po la densité théorique et $\alpha$ la fraction volumique de la phase non-magnétique. Ces deux derniers paramètres peuvent également être déterminés par des techniques conventionnelles. La relation précédente fixe donc, pour un aimant donné, son degré d'anisotropie D. Cette définition du degré d'anisotropie d'un aimant à partir des autres grandeurs caractéristiques de l'aimant est courante. Elle est par exemple utilisée dans le document EP 0 719 745 B1, dans lequel le degré d'anisotropie est dénommé degré d'orientation.

Le degré d'anisotropie magnétique D est par ailleurs fonction de l'orientation des axes de facile aimantation des grains cristallographiques dont est constitué le matériau.

Cette orientation est repérée par rapport à la direction du champ utilisé pour l'aimantation et dans laquelle est mesuré le champ rémanent $B_r$. L'axe de facile aimantation d'un grain individuel du matériau fritté (cristallite) correspond à une direction particulière repérée par rapport aux axes principaux de la maille cristallographique. L'alignement de l'axe de facile aimantation d'un grain cristallographique par rapport à une direction donnée nécessite la rotation des mailles cristallographiques, c'est-à-dire du grain (cristallite) dans son ensemble.

Lorsque tous les axes de facile aimantation des grains sont alignés selon la même direction, le matériau possède un degré d'anisotropie magnétique D qui est maximal et égal à 1. Le matériau est alors qualifié de matériau totalement anisotrope. A l'inverse, lorsque que les axes de facile aimantation des grains sont orientés de façon aléatoire, le matériau possède un degré d'anisotropie magnétique plus faible, par exemple D = ½, et le matériau est alors considéré comme parfaitement isotrope. Les valeurs intermédiaires du degré d'anisotropie magnétique ½ < D < 1 caractérisent des matériaux partiellement anisotropes. Pour une pièce de géométrie annulaire, le champ créant l'aimantation est dirigé selon la direction radiale de l'aimant, c'est-à-dire qu'il présente une direction radiale en tous points de la périphérie de la pièce.

Aussi, le degré d'anisotropie magnétique selon la direction radiale est classiquement utilisé pour caractériser l'orientation des axes de facile aimantation par rapport à cette direction particulière. Dans la suite, le degré D d'anisotropie magnétique sera toujours défini par rapport à cette direction radiale des pièces, et sera considéré comme étant le rapport entre le champ rémanent $B_r$ mesurée dans cette direction et la valeur maximale $B_r^{max}$:

$$D = \frac{B_r}{B_r^{max}}$$

avec la valeur maximale du champ rémanent de l'aimant $B_r^{max}$ donnée par la relation suivante :

$$B_r{}^{max} = J_s \times \left[ \frac{\rho}{\rho_0} (1 - \alpha) \right]^{2/3}$$

Afin d'augmenter le degré d'anisotropie magnétique de la pièce frittée, les axes de facile aimantation des particules de poudres sont alignés selon une direction unique lors des premiers stades de la mise en forme des poudres magnétiques. La direction unique est la direction radiale, au sens précité.

Dans cette étape du procédé, les particules de poudre magnétique sont très peu liées les unes aux autres et peuvent s'orienter individuellement par un mouvement de rotation de la particule selon la direction imposée par le champ magnétique externe. Pour cela, les particules de poudres doivent elles-mêmes être anisotropes, c'est-à-dire que les axes de facile aimantation au sein de ces particules doivent être alignés selon une direction préférentielle. Cette condition est naturellement remplie avec l'utilisation de particules monocristallines, c'est-à-dire constituées d'un seul grain cristallographique. Elle est également remplie par utilisation de particules de poudre polycristallines anisotropes. Ces poudres sont désignées sous ce terme lorsque chaque particule de poudre est elle-même constituée de plusieurs grains cristallographiques assemblés entre eux et possédant tous la même orientation (poudres de type HDDR pour Hydrogénation Décrépitation Décompostion Recombinaison). Les poudres monocristallines ou polycristallines anisotropes sont désignées sous le terme de poudres anisotropes.

A l'inverse, les poudres constituées de particules polycristallines isotropes, c'est-à-dire dont les directions des grains sont aléatoires, sont désignés comme des poudres isotropes. Ces poudres isotropes ne peuvent pas être alignées en vue de produire une pièce frittée possédant un degré d'anisotropie magnétique supérieur à 0,5.

L'intensité du champ magnétique nécessaire à l'orientation des poudres anisotropes incorporées au sein d'un mélange-maître pour l'injection par PIM est de l'ordre de 0,5 à 3T en continu, tandis qu'il est de 2 à 8T en champ pulsé pour le pressage de poudres sèches tassées (pour la compression de poudres à froid par CIF ou en presse uniaxiale). A titre indicatif, le document EP 1 548 761 A1 décrit une méthode pour orienter dans la direction radiale les particules de poudre au sein d'une empreinte de forme annulaire, à l'aide d'un dispositif électromagnétique. Le degré d'anisotropie de l'ensemble des particules de poudres obtenu après compression est typiquement supérieur à 0,8.

Concernant les applications des aimants élaborés par les procédés qui ont été décrits précédemment, il est notamment distingué les systèmes d'accouplement magnétique et les moteurs électriques, comme les servomoteurs ou les moteurs sans balais à courant continu. Dans ces systèmes, des aimants permanents incurvés sont montés en périphérie de pièces de forme cylindrique qui sont entraînées en rotation selon leur axe principal (comme par exemple le rotor d'un moteur électrique). Dans le cas des moteurs, l'intégration dans ces moteurs d'un aimant fritté de forme annulaire et possédant une aimantation orientée radialement (D = 1) avec une intensité élevée (proche de la limite théorique, $B_r = B_r{}^{max}$), est particulièrement avantageuse pour différentes raisons.

Tout d'abord, une orientation radiale du champ rémanent de l'aimant permet d'obtenir un couple optimal entre le rotor et le stator, en minimisant les nuisances sonores et les vibrations. De plus, l'amplitude du couple étant fonction de l'intensité du champ rémanent, les performances du moteur sont améliorées avec l'utilisation d'un aimant possédant une forte anisotropie magnétique. En effet, dans ce cas, tous les moments magnétiques microscopiques du matériau sont alignés et s'ajoutent, ce qui produit un champ rémanent maximum dans cette direction. Cet effet de cumul est d'autant plus important que la densité du matériau est élevée, ce qui est le cas avec un matériau fritté. Ceci permet de réaliser des rotors ayant de grandes densités énergétiques et tournant à très haute vitesse avec un encombrement réduit.

En outre, le fonctionnement à forte vitesse de rotation, par exemple supérieur à 80.000 tr/min, génère des forces d'inertie sur les aimants qui tendent à les arracher du rotor, voire même à les fragmenter. L'utilisation d'un aimant ayant la forme d'une bague radiale permet de réaliser un assemblage très stable avec le rotor.

La fabrication par métallurgie des poudres d'un aimant de forme annulaire anisotrope nécessite de surmonter les risques de fissuration de la pièce, résultant des contraintes thermomécaniques inhérentes au procédé de mise en forme.

Ces contraintes internes apparaissaient lors du refroidissement qui suit l'étape de frittage et trouvent leur origine dans deux caractéristiques propres à ce type d'aimant.

Il s'agit tout d'abord du comportement thermomécanique anisotrope du matériau qui provient de l'orientation préférentielle des axes de facile aimantation. En particulier, les dilatations thermiques sont très différentes entre la direction radiale de la pièce, correspondant à la direction de facile aimantation portant le champ rémanent, et les deux autres directions principales, ce qui provoque des incompatibilités de déformation au sein de la pièce lors de variations de température.

Il s'agit également de la géométrie dite « fermée » de l'anneau, qui bride les possibilités de distorsions de la pièce. Par opposition, dans le cas des géométries dites « ouvertes », par exemple des tuiles, ces déformations favorisent l'accommodation des contraintes internes.

L'élimination de l'une des deux conditions précédentes supprime les contraintes thermomécaniques dans le matériau lors du frittage, mais cela s'opère au détriment des performances du système magnétique. Les solutions

**EP 3 020 055 B1**

proposées dans l'état de l'art pour élaborer des bagues radiales, par les techniques de métallurgie des poudres décrites précédemment, conduisent systématiquement à une réduction des performances de l'aimant.

Par exemple, le document JP 2000-150217 décrit l'ajout d'éléments non magnétiques dans l'alliage initial, conférant à l'aimant des propriétés de déformation plastique qui permettent d'accommoder les contraintes d'élaboration. Toutefois, les éléments d'addition modifient la composition de l'alliage et réduisent la valeur de la polarisation maximale de l'aimant et donc celle du champ rémanent.

Dans le document « JP 07-161512 », il est décrit un procédé de réalisation de bagues à orientation radiale par assemblage de plusieurs secteurs angulaires élaborés séparément. Dans ce cas, il est nécessaire d'usiner précisément les pièces pour réaliser un assemblage régulier. Toutefois, les jonctions entre les secteurs constituent des points faibles mécaniquement, incompatibles avec des sollicitations importantes pouvant résulter de vitesses élevées, de vibrations, etc.

Le document Kools, "Complications in Firing Oriented Hexaferrites Due to Anisotropic Effects," "Cracking of Radially Oriented Rings During Firing," Science of Ceramics, vol. 7, pp. 29-44, (1973), montre que des bagues en ferrite anisotrope à orientation radiale de faible épaisseur, c'est-à-dire avec un rapport entre un rayon intérieur et un rayon extérieur supérieur à 0,85, peuvent être élaborées sans fissuration par frittage. Pour ces bagues minces, les contraintes d'élaboration sont en effet inférieures à la tenue mécanique du matériau. Toutefois, dans ce cas, le volume de l'aimant est réduit, ce qui limite par conséquent les performances globales du système magnétique.

Enfin, le document « JP 11-054352 » est basé sur la diminution du degré d'anisotropie magnétique au sein de la bague, dans une proportion permettant de réduire les incompatibilités de dilatation thermiques entre les directions radiale et tangentielle. A nouveau, les performances de l'aimant, au travers de son champ rémanent qui est fonction du degré d'anisotropie, sont réduites. Les documents DE 20 2005 019268 U1, US 2005/034788 A1 et WO 94/14175 A1 présentent tous trois un aimant annulaire fritté comportant au moins deux anneaux concentriques d'aimantations différentes mais ayant une anisotropie magnétique radiale.

## EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet, selon la revendication 1, un aimant fritté de forme annulaire possédant une orientation radiale du champ magnétique rémanent en tout point de la périphérie de l'aimant, ledit aimant comprenant:

- une partie principale de forme annulaire réalisée dans un matériau ferromagnétique dans lequel il est prévu un premier degré D1 d'anisotropie magnétique dans la direction radiale ; et
- une partie renfort de forme annulaire solidaire de ladite partie principale de l'aimant, la partie renfort étant réalisée dans un matériau ferromagnétique présentant la ou les mêmes phases magnétiques principales que celles du matériau ferromagnétique constitutif de la partie principale, et dans lequel il est prévu un second degré D2 d'anisotropie magnétique dans la direction radiale, le premier degré D1 étant supérieur au second degré D2.

L'invention est avantageuse car elle prévoit l'adjonction d'une partie renfort qui, en présentant une anisotropie plus faible que celle de la partie principale de l'aimant, est capable de produire des contraintes qui s'opposent à celles rencontrées au sein de la partie principale. Les risques de fissuration de cette dernière sont par conséquent largement réduits.

De plus, la partie renfort étant constituée du même matériau ferromagnétique que la partie principale ou présentant au moins la ou les mêmes phases magnétiques principales au sens conventionnel qui sera rappelé ci-après, ces deux parties principale et renfort sont ainsi parfaitement compatibles et leur jonction, par exemple obtenue lors d'une simple opération de co-frittage des poudres constitutives des parties renfort et principale, s'avère très satisfaisante.

Il n'est en particulier pas nécessaire d'ajouter un matériau étranger pour réaliser cette jonction mécanique, les deux parties pouvant en effet être directement au contact l'une de l'autre. Outre le surcoût associé, l'ajout de matériau étranger pour l'assemblage des parties de l'aimant constitue une source de pollution susceptible de dégrader les performances de l'aimant. Cet inconvénient est donc évité par la réalisation d'un aimant monobloc objet de l'invention.

En outre, la conception spécifique de l'aimant selon l'invention permet de facilement envisager sa production avec les techniques existantes pour la fabrication d'aimants homogènes.

Enfin, l'aimant selon l'invention peut être réalisé sans contrainte de dimensions. En particulier, il peut présenter une partie principale avec une épaisseur importante, contrairement à certaines réalisations de l'art antérieur.

L'invention peut présenter au moins l'une des caractéristiques préférentielles suivantes, prises indépendamment ou en combinaison les unes avec les autres.

Ladite partie renfort est agencée à la périphérie intérieure de la partie principale de l'aimant. Alternativement, elle peut être placée extérieurement autour de la partie principale.

Le rapport entre l'épaisseur radiale moyenne de la partie principale et l'épaisseur radiale moyenne de la partie renfort est compris entre 0,1 et 5, et encore plus préférentiellement entre 0,5 et 2.

Le rapport entre le diamètre intérieur et le diamètre extérieur de la partie principale de l'aimant est compris entre 0,5 et 0,85.

Le matériau ferromagnétique constituant les parties principale et renfort de l'aimant appartient à l'un des trois types de composés suivants :

- les alliages de R-Fe-B ayant pour phase magnétique principale $R_2Fe_{14}B$ où R est un élément de la famille des terres rares ;,
- les alliages de R et Co ayant pour phases magnétiques principales $RCo_5$ et $R_2Co_{17}$ où R est un élément de la famille des terres rares ;
- les hexaferrites ayant pour phase magnétique principale $MFe_{12}O_{19}$ avec M = Ba ou Sr.

L'interface entre la partie principale de l'aimant et sa partie renfort est structurée. En d'autres termes, elle n'est dans ce cas pas circulaire, mais présente par exemple des saillies et de creux agencés en alternance le long de cette interface.

La structuration de l'interface permet tout d'abord d'améliorer la tenue mécanique de l'aimant. Les saillies sont alors assimilables à des dents renforçant l'ancrage de la partie renfort dans la partie principale de l'aimant. Egalement, la structuration permet de moduler, selon la direction circonférentielle, l'intensité du champ magnétique à l'issue de l'aimantation finale.

Le premier degré D1 d'anisotropie magnétique selon la direction radiale est supérieur à 0,8 et le second degré D2 est inférieur à 0,8, le rapport entre les deux étant de préférence compris entre 1 et 2.

L'invention a également pour objet, selon la revendication 9, un ensemble d'ébauches pour l'obtention d'un aimant fritté de forme annulaire tel que décrit ci-dessus, l'ensemble comprenant :

- une ébauche de la partie principale de forme annulaire réalisée avec une première poudre de matériau ferromagnétique, au sein de laquelle il est prévu un premier degré D1 d'anisotropie magnétique selon la direction radiale de l'ensemble d'ébauches ; et
- une ébauche de la partie renfort de forme annulaire adjacente à ladite ébauche de la partie principale de l'aimant, l'ébauche de la partie renfort étant réalisée avec une seconde poudre de matériau ferromagnétique présentant la ou les mêmes phases magnétiques principales que celles du matériau ferromagnétique de la première poudre, et au sein de laquelle il est prévu un second degré D2 d'anisotropie magnétique selon la direction radiale de l'ensemble d'ébauches, le premier degré D1 étant supérieur au second degré D2.

Le matériau ferromagnétique constituant les poudres utilisées pour la mise en forme des ébauches appartient de préférence à l'un des trois types de composés suivants :

- les alliages de R-Fe-B ayant pour phase magnétique principale $R_2Fe_{14}B$ où R est un élément de la famille des terres rares,
- les alliages de R et Co ayant pour phases magnétiques principales $RCo_5$ et $R_2Co_{17}$ où R est un élément de la famille des terres rares,
- les hexaferrites ayant pour phase magnétique principale $MFe_{12}O_{19}$ avec M = Ba ou Sr.

Cet ensemble d'ébauches est donc destiné à être fritté puis à subir une étape d'aimantation sous champ magnétique afin d'acquérir une induction magnétique rémanente, à l'issue de laquelle l'aimant est obtenu. Dans le cas de l'obtention des ébauches par injection, l'ensemble selon l'invention ne comprend de préférence pas les vecteurs des mélanges-maîtres, qui ont été préalablement éliminés par déliantage.

En outre, dans l'ensemble d'ébauches selon l'invention, l'ébauche de la partie renfort peut avoir été partiellement frittée, par exemple pour atteindre jusqu'à 95% de sa densité finale, avant le co-frittage de l'ensemble des deux ébauches.

Bien entendu, l'ensemble d'ébauches selon l'invention peut présenter des caractéristiques préférentielles identiques ou analogues à celles de l'aimant, décrites ci-dessus.

L'invention a également pour objet, selon la revendication 10, un procédé de fabrication d'un aimant tel que décrit ci-dessus, dans lequel des ébauches de la partie principale et de la partie renfort sont réalisées par une/des technique(s) de mise en forme de poudre, préférentiellement par injection de poudre ou par compression à froid de poudre. Toutefois, d'autres techniques de mise en forme de poudres connues de l'état de l'art peuvent être utilisées pour produire ces ébauches (par exemple coulage en bande, sérigraphie, impression par jet d'encre, « PressLessProcess » ou PLP, etc.).

Ensuite, quel que soit le mode de mise en forme retenu, les ébauches sont densifiées par co-frittage, ce qui permet d'obtenir simultanément leur assemblage. Par co-frittage, il est conventionnellement entendu le frittage simultané de deux ou plusieurs pièces en contact, frittage au cours duquel les grains aux interfaces entre les pièces se soudent entre eux, pour former des jonctions rigides entre les pièces.

Etant donné que les deux ébauches sont réalisées à base du même matériau ferromagnétique ou à base de matériaux ferromagnétiques présentant au moins les mêmes phases magnétiques principales, l'étape de co-frittage, également dite frittage simultané, est parfaitement maîtrisée. En particulier, un traitement thermique et une atmosphère de frittage identiques conviennent à la densification des deux ébauches.

Le procédé selon l'invention peut présenter au moins l'une des caractéristiques préférentielles suivantes, prises indépendamment ou en combinaison les unes avec les autres.

L'ébauche de la partie renfort et l'ébauche de la partie principale sont réalisées par co-injection.

Selon une première possibilité, l'ébauche de la partie principale est réalisée à partir d'un premier mélange-maître comprenant une poudre anisotrope P1 dudit matériau ferromagnétique, et l'ébauche de la partie renfort est réalisée à partir d'un second mélange-maître comprenant une poudre isotrope P2 dans un matériau ferromagnétique ayant la ou les mêmes phases magnétiques principales que celles de la poudre anisotrope P1.

Selon une seconde possibilité, l'ébauche de la partie principale est réalisée à partir d'un premier mélange-maître comprenant une poudre anisotrope P1 dudit matériau ferromagnétique et un premier vecteur d'injection V1, et l'ébauche de la partie renfort est réalisée à partir d'un second mélange-maître comprenant la poudre anisotrope P1 dudit matériau ferromagnétique, et un second vecteur d'injection V2 choisi de manière à réduire, par rapport au premier vecteur V1, l'aptitude des particules de poudre à orienter leur axe de facile aimantation selon la direction radiale de l'aimant, sous champ magnétique.

Selon une troisième possibilité, l'ébauche de la partie principale est réalisée à partir d'un premier mélange-maître comprenant une poudre anisotrope P1 dudit matériau ferromagnétique et un premier vecteur d'injection V1, et l'ébauche de la partie renfort est réalisée à partir d'un second mélange-maître comprenant la même poudre anisotrope P1, et le même premier vecteur d'injection V1, le taux de charge de poudre Tc1 dans le premier mélange-maître étant différent du second taux de charge de poudre Tc2 dans le second mélange-maître de manière à réduire dans ce dernier, par rapport au premier mélange-maître, l'aptitude des particules de poudre à orienter leur axe de facile aimantation selon la direction radiale de l'aimant, sous champ magnétique.

Par ailleurs, l'ébauche de la partie renfort peut être réalisée avant d'être utilisée ensuite comme une partie du moule pour la réalisation de l'ébauche de la partie principale. Il s'agit alors d'un surmoulage de la partie principale sur la partie renfort.

En outre, l'ébauche de la partie renfort peut être partiellement frittée avant d'être utilisée comme moule pour la réalisation de l'ébauche de la partie principale.

Enfin, l'ébauche de la partie renfort partiellement frittée est aimantée de façon à permettre l'orientation, selon la direction radiale de l'aimant, de l'axe de facile aimantation des grains de l'ébauche de la partie principale, lors de la réalisation de celle-ci. De préférence, l'aimantation précitée peut s'effectuer dans un dispositif magnétique spécifique (aimanteur) indépendant des équipements de mise en forme de l'ébauche de la partie principale.

D'autres avantages et caractéristiques de l'invention apparaîtront dans la description détaillée non limitative ci-dessous.

## BRÈVE DESCRIPTION DES DESSINS

Cette description sera faite au regard des dessins annexés parmi lesquels ;

- la figure 1 représente une vue schématique en coupe d'un aimant selon un mode de réalisation préféré de l'invention ;
- la figure 2 représente une vue schématique en perspective de l'aimant montré sur la figure précédente ;
- la figure 3 représente une vue similaire à celle de la figure 1, avec l'aimant se présentant selon une alternative de réalisation ;
- la figure 3a est un graphe de comparaison du profil des contraintes mécaniques subies le long du rayon d'une bague homogène de l'art antérieur, avec le profil de contraintes au sein d'une bague en deux parties, propre à l'invention ;
- les figures 4a à 4d montrent différentes étapes successives d'un procédé de fabrication de l'aimant des figures 1 et 2, selon un premier mode de réalisation préféré de l'invention ;
- les figures 5a à 5e montrent différentes étapes successives d'un procédé de fabrication de l'aimant des figures 1 et 2, selon un second mode de réalisation préféré de l'invention ;
- les figures 6a à 6g montrent différentes étapes successives d'un procédé de fabrication de l'aimant des figures 1 et 2, selon un troisième mode de réalisation préféré de l'invention ; et
- les figures 7a à 7e montrent différentes étapes successives d'un procédé de fabrication de l'aimant des figures 1 et 2, selon un quatrième mode de réalisation préféré de l'invention.

**EXPOSÉ DÉTAILLÉ DE MODES DE RÉALISATION PRÉFÉRÉS**

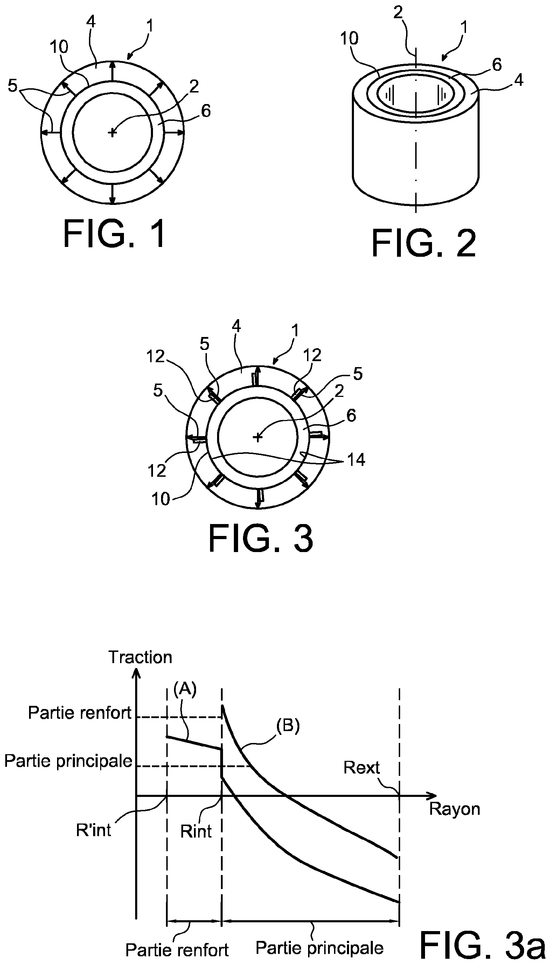

En référence tout d'abord aux figures 1 et 2, il est représenté un aimant fritté de forme annulaire d'axe 2, possédant une orientation radiale du champ magnétique rémanent, schématisée par les flèches 5. Comme indiqué ci-dessus, de façon conventionnelle, il s'agit ici d'une aimantation selon la direction radiale (mesurée ponctuellement), répartie suivant une symétrie de révolution autour de la périphérie de l'aimant de forme annulaire. Autrement dit, en tous points de la périphérie de l'aimant de forme annulaire, le champ magnétique présente une orientation radiale.

Globalement, l'aimant est constitué de deux parties concentriques, solidaires l'une de l'autre et formant un ensemble du type monobloc. Il s'agit tout d'abord d'une partie principale 4 de l'aimant, de forme annulaire et réalisée dans un matériau ferromagnétique, pris parmi les alliages de R-Fe-B, les alliages de R et Co où R est un élément de la famille des terres rares et les hexaferrites de Ba ou Sr.

Dans la partie principale 4 constituant la partie extérieure de l'aimant, il est prévu un matériau ferromagnétique possédant un premier degré D1 d'anisotropie magnétique dans la direction radiale. Ici ainsi que dans la suite de la description, l'expression « degré d'anisotropie magnétique » doit être comprise au sens conventionnel décrit précédemment. Ce degré D1 est de préférence supérieur à 0,8, traduisant une orientation préférentielle des axes de facile aimantation dans la direction radiale.

La partie intérieure de l'aimant, solidarisée à la périphérie intérieure de la partie principale 4, est constituée par une partie renfort 6 de forme annulaire. Elle est réalisée dans le même matériau ferromagnétique que la partie principale.

Par mêmes matériaux ferromagnétiques, il est entendu des matériaux de même composition chimique.

Alternativement, les deux matériaux employés pourraient avoir des compositions chimiques légèrement différentes, tout en conservant la/les mêmes phases magnétiques principales.

A cet égard, il est rappelé qu'un matériau ferromagnétique comprend une ou plusieurs phases magnétiques principales ainsi que des phases secondaires non magnétiques (réparties aux joints de grains par exemple), et qui sont compatibles lors du frittage avec les phases magnétiques principales. Dans l'invention, les deux matériaux ferromagnétiques présentent donc au moins les mêmes phases magnétiques principales, les phases secondaires non magnétiques pouvant différer d'un matériau à l'autre.

De plus, il est entendu que la/les phases magnétiques principales de la partie principale de l'aimant fritté peut être dopée dans les règles de l'art, sans sortir du cadre de l'invention. En d'autres termes, une phase magnétique principale dopée au sein de la partie principale de l'aimant doit être considérée comme identique à la même phase magnétique principale non dopée ou dopée différemment au sein de la partie renfort de cet aimant. Dans ce cas, il est également évoqué la notion de « nuances » d'une même phase magnétique principale.

Le principe de dopage d'une phase magnétique principale d'un aimant est connu de l'homme du métier, et rappelé brièvement ci-dessous.

En effet, certains éléments chimiques au sein des phases magnétiques principales peuvent être substituées par d'autres éléments chimiques compatibles afin d'améliorer une propriété intrinsèque de la phase (l'anisotropie magnétocristalline par exemple). Cette substitution, également dénommée dopage, concerne au maximum 10% de la masse globale de l'ensemble des éléments chimiques de la phase magnétique principale du matériau ferromagnétique. Des exemples possibles de substitution sont donnés dans le tableau ci-dessous.

| Matériaux ferromagnétiques | Phases magnétiques principales | Substitutions possibles au sein de la phase magnétique principale (appelées aussi dopage) |
|---|---|---|
| R-Fe-B (où R désigne au moins un élément de la famille des terres rares), | $R_2Fe_{14}B$ Avec R qui peut être par exemple du Nd (néodyme), Ce (Cerium) | R → Tb (Terbium), Dy (dysprosium), Pr (praseodyme) A titre d'exemple, le Nd (néodyme) de la phase magnétique principale peut être remplacé par du Tb et/ou Dy et/ou Pr. **ET/OU** Fe → Co, Al, Zr Le Fe (Fer) de la phase magnétique principale peut être remplacé par du Co |
|  |  | (cobalt) et/ou Al (aluminium) et/ou Pr (praseodyme). |

(suite)

| Matériaux ferromagnétiques | Phases magnétiques principales | Substitutions possibles au sein de la phase magnétique principale (appelées aussi dopage) |
|---|---|---|
| R-Co (où R désigne au moins un élément de la famille des terres rares), | $RCo_5$ et $R_2Co_{17}$ | $R \rightarrow$ Pr, Ce<br>$Co \rightarrow$ Fe, Cu |
| M-Fe-O<br>Où M = Ba ou Sr. | $MFe_{12}O_{19}$ | $M \rightarrow$ La,Sm,Nd<br>$Fe \rightarrow$ Ti, Al, Zn, Sn |

Les substitutions au sein de la phase magnétique sont avantageuses car elles permettent d'améliorer une propriété magnétique importante du matériau ferromagnétique, sa coercivité. Ces substitutions ont également un effet sur les propriétés physiques et notamment sur les coefficients d'expansion thermique. Par exemple, la substitution du Fe par du Ti au sein de la phase $MFe_{12}O_{19}$ modifie de façon graduelle les valeurs du coefficient d'expansion thermique.

Seuls des matériaux ferromagnétiques présentant les mêmes phases magnétiques principales, au sens précité, sont compatibles d'un point de vue thermodynamique entre eux, lors d'un traitement thermique à haute température (par exemple supérieure à 1000°C), tel que le frittage. Par exemple, la phase magnétique principale $MFe_{12}O_{19}$ est frittée sous air alors que la phase magnétique principale $R_2Fe_{14}B$ est être frittée sous vide secondaire pour garantir sa stabilité. Le cofrittage des deux matériaux ferromagnétiques précités entrainerait une déstabilisation complète des phases magnétiques, qui ne seraient donc par conservées.

Toutefois, comme indiqué ci-dessus, au sein d'une même phase magnétique principale, une composition comprenant un ou plusieurs éléments de substitutions reste compatible lors d'un co-frittage avec la phase magnétique non substituée dont elle relève, ou avec cette même phase ayant des substitutions différentes. Dans ce cas, chaque phase reste stable d'un point thermodynamique lors du co-frittage.

Dans la suite de la description, il sera néanmoins considéré que les deux matériaux ferromagnétiques sont identiques, même s'il peut en être autrement, dans la limite de ce qui a été exposé ci-dessus.

Par ailleurs, dans la partie renfort 6, il est prévu un second degré D2 d'anisotropie dans la direction radiale, le degré D1 étant supérieur au degré D2. Par exemple, le degré D2 est strictement inférieur à 0,8, et le rapport entre D1 et D2 est par exemple compris entre 1 et 2. La partie renfort présente alors une faible anisotropie, destinée à limiter les risques de fissuration de la partie principale 4, qui est quant à elle fortement anisotrope.

Le rapport entre l'épaisseur radiale moyenne de la partie principale et l'épaisseur radiale moyenne de la partie renfort est de préférence compris entre 0,1 et 5, et encore plus préférentiellement comprise entre 0,5 et 2. Par ailleurs, le rapport entre le diamètre intérieur et le diamètre extérieur de la partie principale 4 de l'aimant est compris entre 0,5 et 0,85. Par conséquent, l'aimant selon l'invention peut présenter une épaisseur substantielle.

Comme cela a été décrit précédemment, le refroidissement d'une bague homogène de l'art antérieur constituée d'un seul matériau ferromagnétique possédant une orientation des axes de facile aimantation uniforme dans la direction radiale (D > 0,5), conduit à l'apparition de contraintes thermomécaniques dans la direction tangentielle. Ces contraintes proviennent de la différence des coefficients de dilatation thermique dans la direction radiale $\alpha_r$ et tangentielle $\alpha_t$. L'état libre de contrainte correspond à la fin du palier de frittage réalisé à haute température, c'est-à-dire supérieure à 1000°C. Dans une telle bague, la contrainte de traction est maximale lors du refroidissement complet de la pièce frittée, depuis la température de palier $T_f$ à la température ambiante $T_a$. Cette contrainte de traction imposée par le procédé est localisée sur le rayon interne de la bague. Elle peut être estimée à partir de la relation suivante :

$$\sigma_t^{max} = \frac{(\alpha_r - \alpha_t)\Delta T . E_r}{2} \frac{k^2}{1-k^2} \left[ k\frac{1-\rho^{1+k}}{1-\rho^{2k}}\rho^{k-1} - k\frac{1-\rho^{1-k}}{1-\rho^{-2k}}\rho^{-k-1} - 1 \right]$$

Avec :

$$\Delta T = T_a - T_f$$

$E_r$ : module d'Young du matériau fritté dans la direction radiale
$E_t$ = module d'Young du matériau fritté dans la direction tangentielle

9

$$k = \sqrt{E_t/E_r}$$

$\rho = R_{int}/R_{ext}$ : rapport des rayons interne et externe de la bague

Lorsque cette contrainte imposée par le procédé atteint la résistance en traction du matériau, une fissuration dans la direction radiale de la bague se produit. Dans le cas d'une bague homogène dont le degré d'alignement dans la direction radiale D est de 1, cette contrainte d'élaboration augmente lorsque le rapport des rayons $R_{int}/R_{ext}$ diminue. En d'autres termes, le risque de fissuration augmente avec l'épaisseur de la bague. Par ailleurs, le tableau ci-dessous indique les plus petites valeurs du rapport $R_{int}/R_{ext}$ qu'il est possible d'atteindre sur des bagues homogènes à orientation radiale, constituées par différents matériaux ferromagnétiques.

| Matériau | Contrainte en traction admissible | Valeur minimale du rapport $R_{int}/R_{ext}$ |
|---|---|---|
| NdFeB | 160 MPa | 0,60 |
| SmCo | 35 MPa | 0,90 |
| SrFeO | 85 MPa | 0,86 |

La diminution du degré d'alignement dans la direction radiale (D < 1) permet de réaliser des bagues homogènes plus épaisses. En effet, le niveau des contraintes thermomécaniques baisse avec le paramètre d'alignement D. Cela provient du fait que la réduction du paramètre D implique une atténuation du différentiel des coefficients d'expansion thermique dans les directions radiale et tangentielle. Le différentiel des coefficients de dilatation thermique peut être estimé en fonction du degré d'alignement par la relation :

$$(\alpha_r - \alpha_t)_D = (\alpha_r - \alpha_t)_{D=1} \times \lfloor D(2D - 1)\rfloor$$

La réalisation de bagues homogènes épaisses n'est donc pas compatible avec l'obtention d'un degré d'alignement élevé et donc incompatible avec des propriétés magnétiques (Br) élevées. Un compromis doit être recherché entre la tenue mécanique et le flux magnétique délivré par l'aimant annulaire.

Le tableau ci-dessous indique, pour différentes valeurs du rapport $R_{int}/R_{ext}$, les valeurs de degré d'orientation maximale qu'il est possible d'atteindre dans l'état de l'art.

| Matériau | $R_{int}/R_{ext}$ = 0,9 | $R_{int}/R_{ext}$ = 0,8 | $R_{int}/R_{ext}$ = 0,7 | $R_{int}/R_{ext}$ = 0,6 |
|---|---|---|---|---|
| SmCo | $D_{max}$ = 1 | $D_{max}$ = 0,77 | $D_{max}$ = 0,68 | $D_{max}$ = 0,63 |
| SrFeO | $D_{max}$ = 1 | $D_{max}$ = 0,88 | $D_{max}$ = 0,76 | $D_{max}$ = 0,69 |

La fabrication de bagues en deux parties telle que décrite par l'invention permet de dépasser les limitations précédentes, en termes de dimension et/ou de degré d'orientation. Comme indiqué précédemment, le principe de l'invention consiste à utiliser une partie de la bague comme un renfort mécanique sur lequel sont reportées les contraintes mécaniques dommageables pour la partie principale de l'aimant. La partie principale est alors déchargée des contraintes thermomécaniques et peut donc être élaborée avec les propriétés magnétiques optimales, conformes à celles que l'on peut atteindre avec le matériau ferromagnétique. Ce principe est illustré par la figure 3a, qui permet de comparer le profil des contraintes mécaniques imposées par le procédé le long du rayon d'une bague homogène de l'art antérieur, sans renfort (courbe (B)),avec le profil de contraintes au sein d'une bague en deux parties telles que décrites dans l'invention (courbe (A)).

Dans l'invention, comme visible sur le graphe de la figure 3a, la partie principale est ainsi précontrainte par la partie renfort de façon à abaisser le niveau de contrainte de traction en dessous de la valeur admissible (résistance en traction du matériau). La valeur de la précontrainte est fonction du différentiel des coefficients de dilatation thermique entre le renfort et la partie principale :

$$\sigma_t^{pre} \propto \left(\alpha_r^{renfort} - \alpha_r^{partie\ principale}\right)$$

Les valeurs des coefficients de dilatation thermique dans les deux parties, présentant la même phase magnétique principale, sont fonction de la phase magnétique considérée et de paramètres de microstructure tels que le degré d'orientation, la morphologie des grains, la nature et la teneur en éléments de substitution dans la phase magnétique principale. Ces paramètres peuvent être ajustés sur chacune des deux parties de la bague, sans modifier la phase magnétique, afin de maintenir dans chacune des deux parties le niveau de contrainte imposée par le procédé en dessous de la limite en traction et d'éviter ainsi la fissuration. Le calcul précis des niveaux de contraintes peut être réalisé par une analyse thermomécanique par un logiciel de calcul de structures, basé sur la Méthode des Eléments Finis. Ces codes de calcul sont courants et connus de l'homme du métier, ils ne sont pas davantage décrits.

Ce principe est appliqué dans les trois exemples suivants.

## 1. Fabrication de bagues frittées anisotropes de type SmCo

Les matériaux ferromagnétiques de type SmCo présentent la plus faible résistance en traction (typiquement 35 MPa) parmi les matériaux considérés, si bien que des bagues à orientation radiale dont le rapport des rayons Rint/Rext est inférieur à 0,9 ne peuvent pas être réalisées par frittage. Dans l'exemple suivant, il est démontré qu'il est possible de réaliser une bague de type SmCo avec un champ parfaitement orientée dans la direction radiale (D = 1) avec un rapport Rint/Rext égal à 0,8, en utilisant un renfort isotrope SmCo dans la partie interne. Le tableau suivant donne les valeurs de contrainte maximale de traction atteinte dans la bague avec renfort, en fonction de la valeur du rayon interne du renfort R'int.

Ces valeurs ont été obtenues par des calculs par Eléments Finis. Il est possible de constater qu'un rayon interne R'int inférieur ou égal à 0,7 fois le rayon extérieure de bague (Rext) est suffisant pour éviter la fissuration de la bague lors de l'élaboration.

| $R'_{int}/R_{ext}$ | Contrainte de traction maximale (MPa) |
|---|---|
| 0,79 | 43 |
| 0,75 | 37 |
| 0,70 | 32 |
| 0,65 | 28 |
| 0,60 | 25 |
| 0,50 | 21 |

L'application de l'invention n'est pas limitée à ce seul exemple. Pour d'autres géométries et types d'aimants, un renfort spécifique peut être dimensionné en suivant le même principe.

## 2. Fabrication de bagues frittées anisotropes de type hexaferrite SrFeO

La résistance en traction des hexaferrites est supérieure à celle des matériaux SmCo. Elle dépend toutefois de plusieurs paramètres microstructuraux, dont la taille et la forme des grains.

Selon le mode de synthèse des poudres d'hexaferrite, les grains peuvent être plus au moins allongés et se présenter soit sous forme de grains équi-axes, soit sous forme de plaquettes. Cette morphologie est caractérisée par le rapport entre la longueur du grain et sa hauteur (L/H). Les caractéristiques mécaniques obtenues avec deux types de morphologie de grains, pour une même phase magnétique principale, sont données ci-dessous.

| | Résistance en traction MPa | Ténacité MPa.m$^{1/2}$ |
|---|---|---|
| Grains equiaxes (L/H < 2) | 150 | 2,14 |
| Grains allongés (L/H = 5) | 85 | 2,36 |

Ces données montrent que la phase magnétique $SrFe_{12}O_{19}$ possédant une résistance en traction élevée présente la plus faible ténacité. Or, pour réaliser une bague frittée à orientation radiale, il est préférable de privilégier la morphologie de grains conduisant à la résistance en traction la plus élevée (grains équi-axes). Dans ce cas toutefois, la ténacité du matériau est minimale, ce qui est pénalisant pour la tenue mécanique, par exemple lors d'opération de rectification. Avec la présente invention, il est démontré qu'il est possible de réaliser une bague à orientation radiale en hexaferrite présentant une ténacité optimale.

Le cas décrit concerne une bague à orientation radiale parfaite (D = 1) dont la partie extérieure présente un rapport de rayons $R_{int}/R_{ext}$ égal à 0,85. Sans la présence d'un renfort, la contrainte de traction maximale imposée par le procédé de frittage est de 90 MPa, supérieure à la résistance en traction du matériau à grains allongés. Il est donc judicieux, dans ce cas, d'utiliser des grains équi-axes pour conférer au matériau une résistance en traction suffisante (150 MPa).

En utilisant un renfort interne décrit ci-après, il est possible de réduire significativement la contrainte imposée par le procédé dans la partie principale, sans modifier sa géométrie ($R_{int}/R_{ext}$ égale à 0,85) ni son degré d'orientation (D = 1). Le tableau suivant détaille les configurations qui sont possibles pour la partie renfort:

|  | Solution 1 | Solution 2 |
|---|---|---|
| Rapport rayon interne du renfort sur le rayon externe bague $R'_{int}/R_{ext}$ | 0,8 | 0,5 |
| Degré d'alignement du renfort | 0,97 | 0,5 |
| Contrainte maximale de traction dans le renfort | 140 MPa | 145 MPa |
| Contrainte maximale de traction dans la partie principale | 40 MPa | 0 MPa |

Dans ces deux solutions, la partie principale de la bague est soumise à des contraintes maximales inférieures à 50 MPa, ce qui permet d'utiliser des grains allongés et d'atteindre une ténacité supérieure de 10 % à la valeur obtenue sur une bague homogène. La partie renfort est alors constituée de grains équi-axes pour supporter la contrainte de traction qui est reportée sur cette partie. L'obtention d'une bague à orientation radiale dont la ténacité est optimale est avantageuse car elle permet d'améliorer la résistance de l'aimant lors d'opérations d'usinage, qui sont couramment réalisées à l'issue de la mise en forme afin de garantir les spécifications dimensionnelles. L'application de l'invention n'est pas limitée à ce seul exemple. Pour d'autres géométries et types d'aimants, un renfort spécifique peut être dimensionné en suivant le même principe.

### 3. Fabrication de bagues frittées anisotropes de type NdFeB

Les matériaux de type NdFeB possèdent une résistance en traction élevée (supérieure à 150 MPa pour D = 1). La résistance à la rupture augmente sensiblement lorsque le degré d'alignement diminue Elle atteint 330 MPa pour un matériau isotrope (D = 0,5).

Cette caractéristique permet de concevoir des bagues épaisses en NdFeB à orientation radiale, sans risque de fissuration lors de l'élaboration.

L'utilisation d'aimants montés en surface externe des rotors de moteurs engendre lors de la mise en rotation à forte vitesse des contraintes supplémentaires de traction, dans la direction tangentielle. Ces contraintes sont provoquées par les forces centrifuges. En tout point de l'aimant, les contraintes supplémentaires peuvent être estimées par la relation :

$$\Delta\sigma = \rho R^2 \Omega^2$$

$\rho$ : densité du matériau
$R$ : position radiale dans la bague
$\Omega$ : vitesse angulaire

Ces contraintes s'ajoutent aux contraintes d'élaboration, et peuvent provoquer la rupture de l'aimant lorsque la résultante atteint la résistance en traction de l'aimant. Il est choisi l'exemple d'une bague à orientation radiale parfaite (D = 1) avec un rapport de rayons $R_{int}/R_{ext}$ égal à 0,8 et un rayon extérieur $R_{ext}$ égal à 100 mm. A l'issue de l'élaboration par frittage, cette bague homogène est soumise par le procédé à une contrainte de traction maximale de 70 MPa. Lorsque la bague est entraînée à 15000 tr/min, la contrainte totale est alors de 190 MPa, valeur supérieure à la résistance en traction du matériau (160 MPa pour D = 1) et provoquant la fissuration de l'aimant.

La présente invention permet de concevoir une bague NdFeB à orientation radiale de même dimensions $R_{int}/R_{ext}$ égal à 0,8 ($R_{ext}$ égal à 100 mm) et de même caractéristiques magnétiques (D = 1), pouvant résister à une mise en rotation à 15.000 tr/min. Pour cela, il est prévu un renfort interne du même matériau possédant un degré d'alignement compris entre 0,5 et 0,75 et caractérisé par le rapport de rayons $R'_{int}/R_{ext}$ égal à 0,6. Dans ce cas, à 15.000 tr.min, la contrainte de traction dans la partie principale est réduite à 50 MPa et le renfort est chargé à 210 MPa au maximum, valeur inférieure à la résistance en traction.

L'application de l'invention n'est pas limitée à ce seul exemple. Pour d'autres géométries, types d'aimants et vitesse de rotation, un renfort spécifique peut être dimensionné en suivant le même principe.

Dans le mode de réalisation représenté sur les figures 1 et 2, l'interface 10 entre la partie principale 4 et la partie renfort 6 est circulaire, et plus exactement cylindrique. Selon un autre mode de réalisation montré sur la figure 3, cette interface 10 peut être structurée afin d'améliorer la tenue mécanique de l'aimant et/ou de moduler l'intensité du champ magnétique dans la direction circonférentielle, à l'issue de l'aimantation finale.

Pour ce faire, l'interface peut présenter le long de celle-ci, en alternance, des saillies 12 par exemple en forme de dents, et des creux 14.

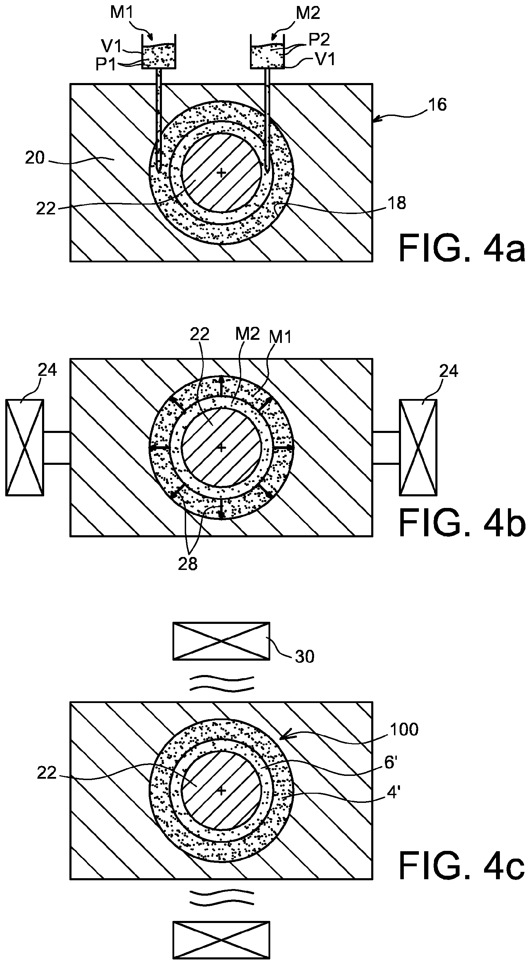

En référence à présent aux figures 4a à 4d, il va être décrit un premier mode de réalisation préféré d'un procédé de fabrication de l'aimant montré sur les figures 1 et 2. Néanmoins, ce premier mode de réalisation, tout comme ceux qui seront décrits ci-après, sont également applicables pour la fabrication de l'aimant montré sur la figure 3 avec une interface structurée.

Dans ce premier mode de réalisation préféré, il est réalisé une ébauche de la partie renfort et une ébauche de la partie principale par co-injection.

Pour ce faire, l'ébauche de la partie principale est réalisée à partir d'un premier mélange-maître M1, comprenant une poudre anisotrope P1 du matériau ferromagnétique. Cette poudre P1 est mélangée avec un premier vecteur V1 de la poudre, correspondant à une formulation polymérique/organique, également dénommée liant polymérique. Comme cela est connu de l'homme du métier, le mélange-maître s'injecte comme un matériau thermoplastique.

De préférence, dans ce premier mélange-maître M1, la poudre est anisotrope, sous une forme polycristalline obtenue de préférence par la technique dite de HDDR (hydrogénation-décomposition-désorption-recombinaison), ou sous une forme monocristalline obtenue préférentielle à partir de l'alliage par la technique de trempe sur roue, identique à la technique dite de « strip casting » permettant la réalisation de rubans cristallisés. L'opération de trempe sur roue est suivie d'un traitement d'hydrogénation déshydrogénation (HD) et d'un broyage par jet de gaz permettant d'obtenir des particules monocristallines de 0,5 à 15 $\mu$m.

Par ailleurs, l'ébauche de la partie renfort est réalisée à partir d'un second mélange-maître M2, comprenant une poudre isotrope P2 de même composition que la poudre P1, mais constituée de particules polycristallines. La poudre P2 est mélangée avec le même premier vecteur V1 de la poudre P1, même si un vecteur différent peut être utilisé. La poudre polycristalline P2 est parfaitement isotrope ou possède un degré d'anisotropie faible, inférieur à 0,8. Cette poudre P2 peut par exemple être issue du retraitement de pièces rebutées ou être élaboré préférentiellement à partir de l'alliage par la technique de trempe sur roue.

Comme cela est schématisé sur la figure 4a, les deux mélanges-maîtres M1, M2 sont injectés dans un moule 16, qui présente une cavité 18 en forme de tube délimitée par la paroi intérieure d'un cylindrique creux 20 ou analogue, et la paroi extérieure d'un cylindre plein 22 de plus faible diamètre, placé au centre. Les diamètres, hauteur et épaisseur de la cavité 18 sont ajustés de façon à produire des bagues ayant les dimensions visées. La prise en compte des retraits volumiques ultérieurs lors du déliantage et du frittage intervient dans le dimensionnement géométrique du moule 16.

Une fois les mélanges-maîtres M1, M2 injectés aux endroits souhaités dans la cavité 18 du moule, il est procédé à l'orientation des grains de la poudre P1, par application d'un champ magnétique, par exemple de l'ordre de 0,5 - 3 T. La manière d'appliquer ce champ est connue de l'homme du métier, qui peut ainsi utiliser tout moyen 24 pour le générer. A cet égard, des moyens 24 ont été schématisés sur la figure 4b, en étant associés ou intégrés à la partie extérieure 20 du moule. Ce champ est généralement obtenu à partir d'un système d'aimants permanents ou de bobines conductrices. Il permet d'aligner les axes de facile aimantation des grains de poudres anisotropes P1 dans la direction radiale de l'ébauche, comme cela a été schématisé par les flèches 28 sur la figure 4b. En revanche, ce champ n'a pas d'effet sur la poudre isotrope P2, ce qui permet d'obtenir la différence souhaitée entre les degrés d'anisotropie D1, D2, dans la direction radiale de l'ébauche.

L'orientation des grains par champ magnétique est effectuée au sein du moule avec le mélange-maître à l'état fondu. A l'issue de l'injection, les pièces sont refroidies et solidifiées, ce qui fige l'orientation des grains dans les deux mélanges-maîtres.

Il est ensuite opéré une élimination des vecteurs V1, cette opération étant dénommée « déliantage », et opérée par des moyens conventionnels 30 représentés schématiquement sur la figure 4c. Il peut s'agir d'un traitement thermique à température intermédiaire, très inférieure à la température de frittage des poudres P1 et P2, mais suffisante pour permettre l'élimination des polymères. Il peut également s'agir d'un traitement chimique d'élimination par un solvant, une solution aqueuse ou d'un traitement par circulation d'un fluide super critique, ou encore d'un traitement catalytique.

Après cette opération d'élimination des vecteurs, il est obtenu un ensemble d'ébauches 100 également objet de la présente invention, comprenant l'ébauche 4' de la partie principale, adjacente et solidarisée à l'ébauche 6' de la partie renfort, comme cela a été référencé sur la figure 4c.

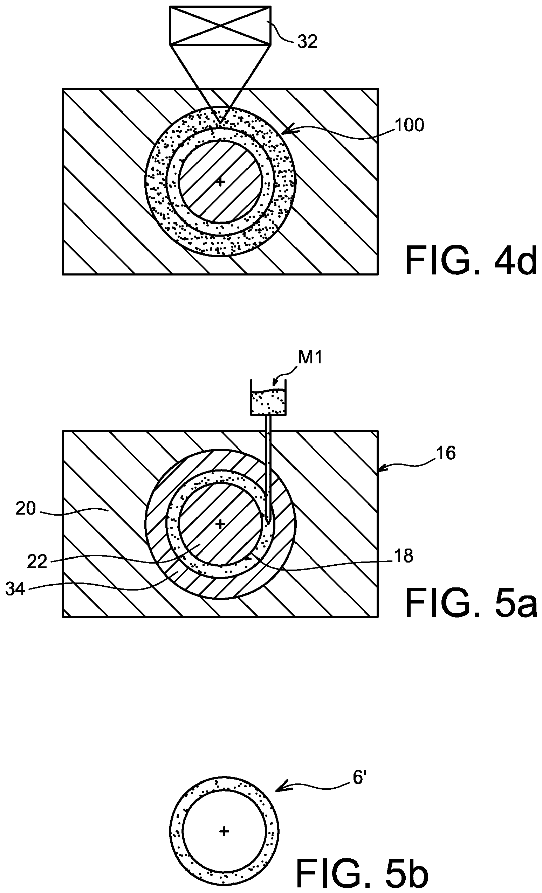

L'ensemble d'ébauches 100 est ensuite fritté, de manière conventionnelle, identique ou similaire à un frittage d'une pièce homogène. Il s'agit donc d'un co-frittage des deux ébauches, au cours duquel les grains conservent leurs orientations adoptées après l'application du champ magnétique par les moyens 24. Ici également, les moyens de frittage 32, représentés schématiquement sur la figure 4d, peuvent être tous moyens réputés appropriés par l'homme du métier. Durant le co-frittage, les deux parties renfort et principale s'assemblent rigidement au niveau de leur interface.

La pièce monobloc obtenue est ensuite démoulée puis aimantée de manière classique, de manière à présenter le champ magnétique rémanent désiré.

Deux variantes peuvent être envisagées pour ce premier mode de réalisation préféré. Dans une première variante, l'ébauche 4' de la partie principale est toujours réalisée à partir du premier mélange-maître M1 comprenant la poudre anisotrope P1 du matériau ferromagnétique, et le premier vecteur d'injection V1. Néanmoins, l'ébauche 6' de la partie renfort est quant à elle réalisée à partir à partir d'un second mélange-maître M2 comprenant la même poudre anisotrope P1 mélangée avec un second vecteur d'injection V2 différent de V1. Ce second vecteur V2 est choisi de manière à réduire, par rapport au premier vecteur V1, l'aptitude des grains/particules à orienter leur axe de facile aimantation selon la direction radiale de l'aimant, sous l'effet du champ magnétique produit par les moyens 24.

Dans une seconde variante, l'ébauche 4' de la partie principale et l'ébauche 6' de la partie renfort sont toutes les deux réalisées à partir d'un mélange-maître M1, M2 comprenant la poudre anisotrope P1 et le premier vecteur d'injection V1, mais le taux de charge Tc1 de poudre dans le premier mélange-maître M1 est différent du second taux de charge de poudre Tc2 dans le second mélange-maître M2, de manière à réduire dans ce dernier, par rapport au premier mélange-maître M1, l'aptitude des grains-particules à orienter leur axe de facile aimantation selon la direction radiale de l'aimant, sous l'effet du champ magnétique généré par les moyens 24.

Aussi, lors de la mise en oeuvre des deux variantes, l'application du champ magnétique aux deux mélanges-maîtres M1, M2 a plus d'influence sur l'orientation des grains de la poudre du premier mélange-maître, ce qui permet d'aboutir facilement à la différence souhaitée entre les degrés d'anisotropie D1 et D2.

Les figures 5a à 5e schématisent différentes étapes successives d'un procédé de fabrication de l'aimant 1 par surmoulage, selon un second mode de réalisation préféré. Dans ce second mode, l'ébauche de la partie renfort est réalisée avant d'être utilisée comme une partie du moule pour la réalisation de l'ébauche de la partie principale.

En effet, à l'aide de l'un des mélanges-maîtres M1, M2 décrits précédemment, il est procédé au moulage de l'ébauche de la partie renfort. Ce moulage peut s'effectuer dans un moule 16 analogue à celui du mode précédent, dans lequel il est agencé un insert 34 pour adapter la forme de la cavité 18 à celle du renfort désiré. Un tel insert est représenté sur la figure 5a.

Aucune orientation des grains de poudre n'est réalisée après l'injection dans le moule, la poudre conservant ainsi un caractère isotrope ou faiblement anisotrope. Après refroidissement du mélange-maître, la pièce obtenue représentée sur la figure 5b, dite ébauche 6' de la partie renfort, est démoulée.

Cette ébauche 6' est ensuite replacée dans le moule 16, ou bien peut être conservée dans celui-ci si ce même moule peut permettre le surmoulage de l'ébauche de la partie principale de l'aimant.

Pour la formation de cette ébauche de la partie principale, il est utilisé un mélange-maître M3 comprenant la poudre anisotrope P1 du matériau ferromagnétique, mélangée avec un troisième vecteur V3 dont le point de fusion est moins élevé que celui du vecteur V1.

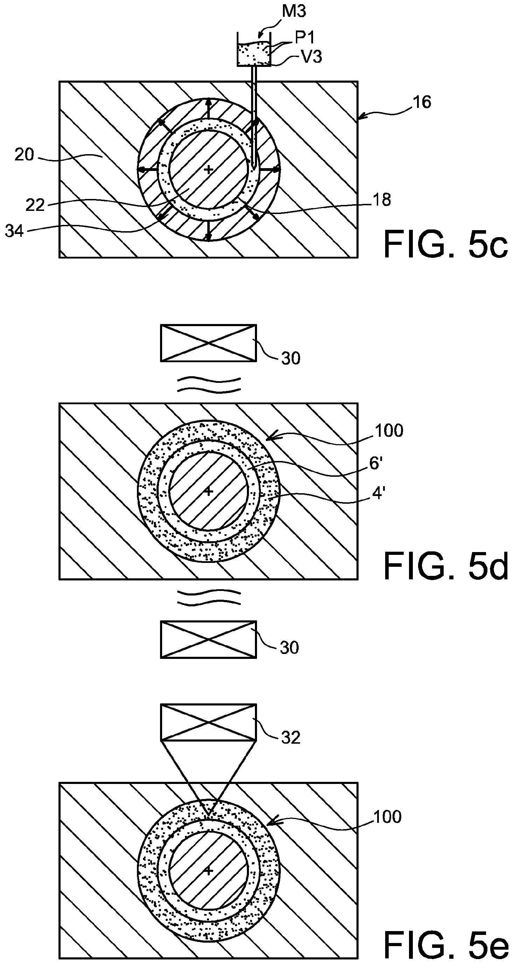

Comme cela est montré sur la figure 5c, le second mélange-maître M3 est alors injecté dans le moule 16 entre l'ébauche 6' et la partie extérieure du moule 16.

Une fois le mélange-maître M3 injecté dans le moule, il est procédé à l'orientation des grains de la poudre P1, par application d'un champ magnétique, par exemple de l'ordre de 0,5 - 3 T, de la même manière que celle décrite dans le cadre du mode de réalisation précédent. Pour le mélange-maître M3, ce champ permet donc d'aligner les axes de facile aimantation des particules de poudres anisotropes P1 dans la direction radiale, comme cela a été schématisé par les flèches 28 sur la figure 5c. En revanche, ce champ n'a pas d'effet sur la poudre P1 de l'ébauche 6', car la position et l'orientation des grains y sont déjà figées. Cela permet d'obtenir la différence souhaitée entre les degrés d'anisotropie D1 et D2.

En référence à la figure 5d, le procédé est poursuivi d'une manière analogue à celle du premier mode, par élimination des vecteurs V1, V3 conduisant à l'obtention de l'ensemble d'ébauches 100 comportant les ébauches solidaires 4' et 6'.

Ensuite, comme schématisé sur la figure 5e, le frittage de cet ensemble 100 est réalisé, et la pièce monobloc obtenue est ensuite démoulée puis aimantée de manière classique, de manière à présenter le champ magnétique rémanent désiré.

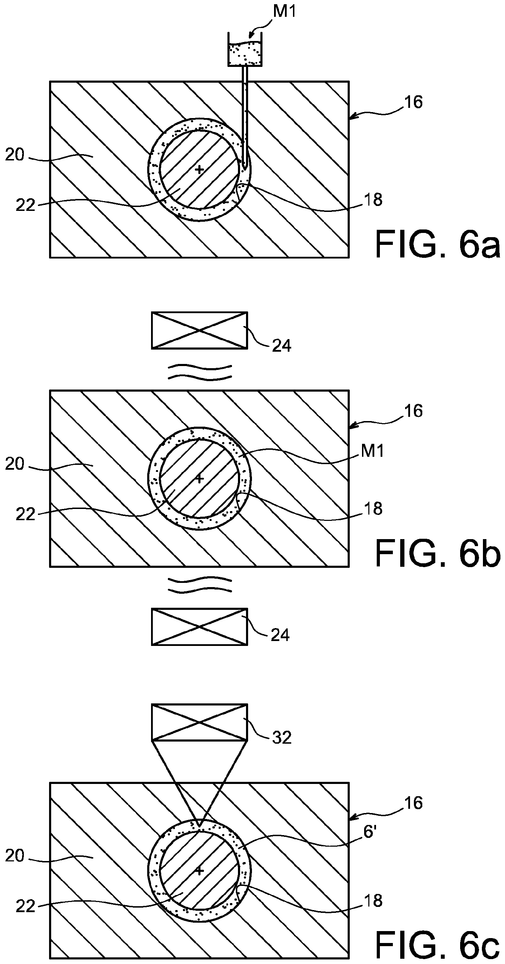

Les figures 6a à 6g schématisent différentes étapes successives d'un procédé de fabrication de l'aimant 1 selon un troisième mode de réalisation préféré. Dans ce troisième mode, l'ébauche de la partie renfort est également réalisée avant d'être utilisée comme moule pour la réalisation de l'ébauche de la partie principale.

La réalisation de l'ébauche 6' s'effectue avec un moule distinct ou identique à celui utilisé ultérieurement pour l'ébauche de la partie principale. Cependant, après mise en forme et éjection de la presse du premier ou second mélange-maître M1, M2 comprenant la poudre P1 ou P2 et le vecteur V1, il est procédé à l'élimination du vecteur V1 à l'aide des moyens 24, ainsi qu'à un frittage partiel de cette ébauche, à l'aide des moyens 32. Ces étapes sont schématisées sur les figures 6a à 6c. Le frittage partiel peut être réalisé jusqu'à l'obtention d'une densité comprise entre environ 0,7 et 0,95 de la densité finale.

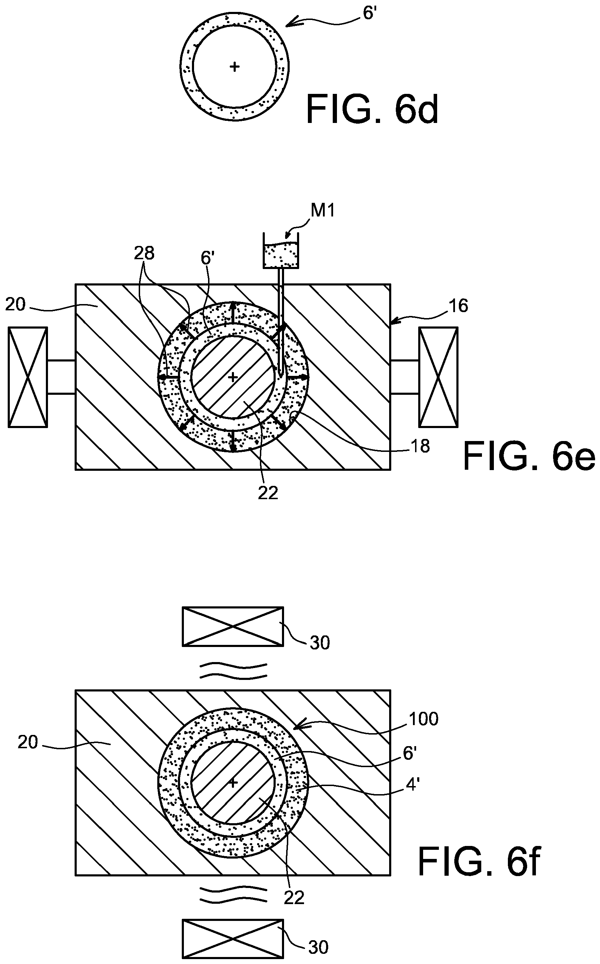

Ensuite, l'ébauche 6' partiellement frittée est démoulée comme cela est représenté sur la figure 6d, puis placée dans le moule 16 pour permettre le surmoulage de l'ébauche de la partie principale de l'aimant. Eventuellement, un insert peut être placé dans le creux de l'ébauche 6', pour renforcer sa tenue mécanique lors du surmoulage de l'ébauche 4'.

Pour la formation de cette ébauche de la partie principale, il est utilisé le premier mélange-maître M1 comprenant la poudre anisotrope P1 du matériau ferromagnétique, mélangée avec le vecteur V1.

Comme cela est montré sur la figure 6e, le premier mélange-maître M1 est alors injecté dans le moule 16 entre l'ébauche 6' et la partie extérieure du moule 16.

Une fois le mélange-maître M1 injecté dans le moule, il est procédé à l'orientation des grains de la poudre P1, par application d'un champ magnétique, par exemple de l'ordre de 0,5 -3 T, de la même manière que celle décrite dans le cadre du mode de réalisation précédent. Pour le mélange-maître M1, ce champ permet donc d'aligner les axes de facile aimantation des grains de poudres anisotropes P1 dans la direction radiale, comme cela a été schématisé par les flèches 28 sur la figure 6e. En revanche, ce champ n'a pas d'effet sur la poudre P1 de l'ébauche 6' partiellement frittée, car la position et l'orientation des grains y sont déjà figées. Cela permet d'obtenir la différence souhaitée entre les degrés d'anisotropie D1 et D2.

En référence à la figure 6f, le procédé est poursuivi d'une manière analogue à celle du premier mode, par élimination du vecteur V1 conduisant à l'obtention de l'ensemble d'ébauches 100 comportant les ébauches solidaires 4' et 6', dont la seconde 6' est déjà partiellement frittée.

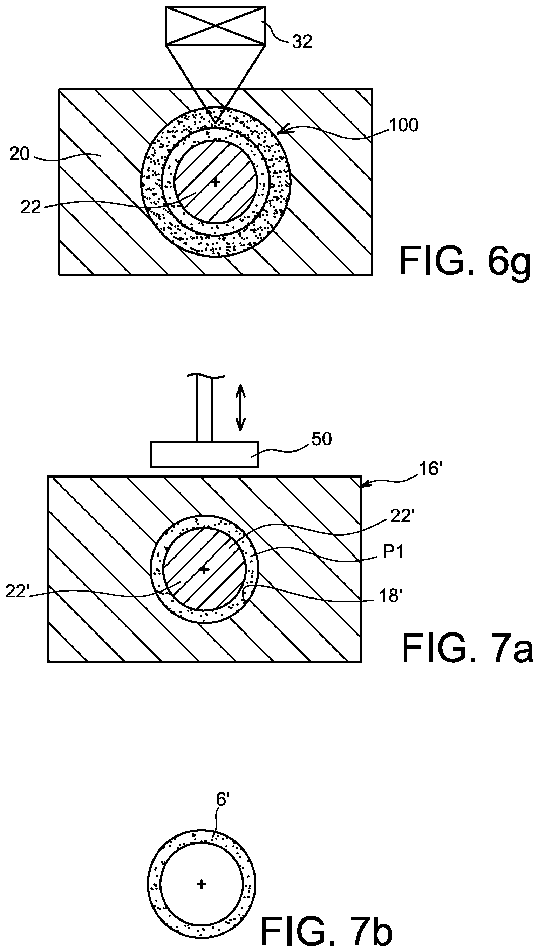

Ensuite, comme schématisé sur la figure 6g, cet ensemble 100 est démoulé puis fritté, et la pièce monobloc obtenue est aimantée de manière classique, de manière à présenter le champ magnétique rémanent désiré.

Il est noté que la porosité résiduelle au sein de l'ébauche 6', avant le co-frittage, peut avantageusement être mise à profit d'une part pour améliorer la jonction avec la partie principale par un effet d'ancrage et, d'autre part, pour accompagner le frittage de la partie principale dans la direction tangentielle de la pièce, et augmenter ainsi la densité finale de cette partie.

Enfin, dans une variante de ce troisième mode, l'ébauche de renfort fritté à haute densité peut être aimantée dans un dispositif indépendant du moule, afin de constituer la source du champ magnétique produisant l'orientation de la poudre anisotrope P1 lors du surmoulage de l'ébauche de la partie principale. Dans ce cas, aucun dispositif d'orientation spécifique n'est nécessaire lors de l'injection du premier mélange-maître M1 destiné à la formation de l'ébauche 4'.

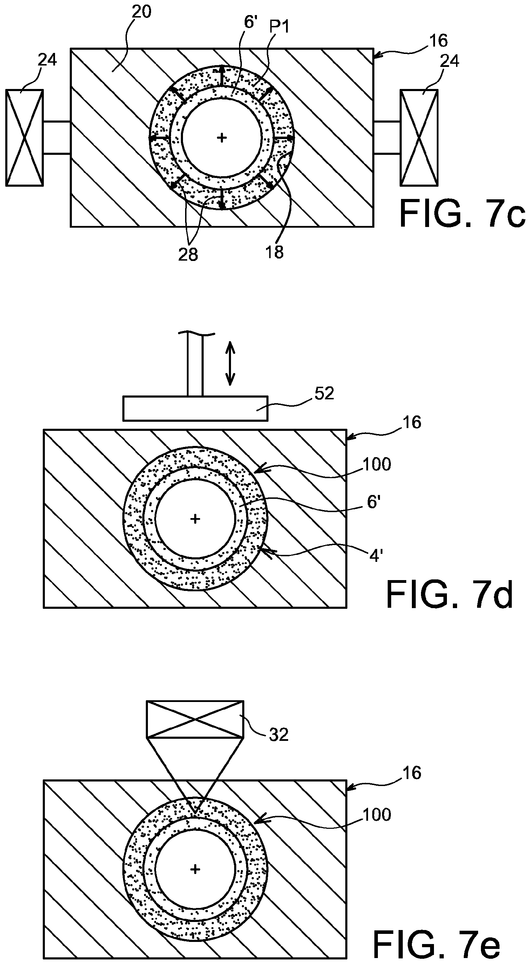

Les figures 7a à 7e schématisent différentes étapes successives d'un procédé de fabrication de l'aimant 1 selon un quatrième mode de réalisation préféré. Dans ce quatrième mode, contrairement aux précédents, les ébauches sont réalisées par compression de poudre à froid, préférentiellement par pressage uniaxial ou encore par compression isostatique. Cependant, toute autre technique de mise en forme d'ébauches à partir de poudre peut s'appliquer.

Sur les figures, il a été représenté une partie de l'outillage servant à la mise en oeuvre d'une technique de compression de poudre à froid par pressage uniaxial. Cependant, la technique de compression isostatique à froid est similaire, et l'homme du métier sera en mesure d'adapter l'outillage pour la mise en oeuvre de cette technique de compression isostatique.

Le renfort est préalablement mis en forme par compression à froid de la poudre anisotrope P1, sans subir d'orientation. Pour cela, il est prévu un moule cylindrique 16' comprenant un insert métallique rigide 22' de forme cylindrique placé au centre. Dans le cas d'une compression en matrice, le moule est constitué par une matrice cylindrique creuse rigide 18' représentée sur la figure 7a. La poudre P1 est placée dans la matrice 18' et compressée à l'aide d'une presse 50 ou similaire. A l'issue de cette première compression, les particules anisotropes de la poudre P1 sont figées et ne peuvent plus être alignées ultérieurement par un champ magnétique.

Il en découle une ébauche poreuse 6' qui est extraite de la matrice, comme cela est schématisé sur la figure 7b. L'ébauche 6' présente un caractère isotrope ou faiblement anisotrope.

Ensuite, l'ébauche 6' est placée dans un autre moule 16 pour permettre la formation de l'ébauche de la partie principale de l'aimant. Eventuellement, l'insert 22' du moule 16' peut être placé dans le creux de l'ébauche 6', pour renforcer sa tenue mécanique lors de la formation par compression de l'ébauche 4'.

Pour la formation de cette ébauche de la partie principale, il est utilisé la même poudre anisotrope P1 du matériau ferromagnétique, qui est insérée dans la matrice 18 du moule 16, comme cela est schématisé sur la figure 7d.

A l'issue du remplissage, il est procédé à l'orientation des grains de la poudre P1, par application d'un champ magnétique à l'aide des moyens 24 dédiés à cette fonction. Dans ce mode de réalisation, il peut s'agir de bobinages conducteurs insérés dans l'outillage de la presse et produisant un champ de 1 à 2 T. A titre indicatif, dans le cas de la compression isostatique à froid, le remplissage de poudre s'effectue dans un moule flexible amovible, et la poudre anisotrope P1 peut être orientée grâce à un dispositif indépendant de la presse, produisant un champ de 2 à 8 T.

La poudre P1 de l'ébauche de la partie principale, qui dispose à présent de grains orientés convenablement, est ensuite compactée par une presse 52, comme cela est schématisé sur la figure 7d.

Cela aboutit à l'obtention de l'ensemble d'ébauches 100 montré sur la figure 7d, qui est ensuite fritté, de manière conventionnelle identique ou similaire à un frittage d'une pièce homogène. Il s'agit donc d'un co-frittage des deux ébauches 4', 6', au cours duquel les grains compactés conservent leurs orientations adoptées après l'application du champ magnétique par les moyens 24. Ici également, les moyens de frittage 32, représentés schématiquement sur la figure 7e, peuvent être tous moyens réputés appropriés par l'homme du métier.

La pièce monobloc obtenue est ensuite démoulée puis aimantée de manière classique, de manière à présenter le champ magnétique rémanent désiré.

**Revendications**

1. Aimant fritté (1) de forme annulaire possédant une orientation radiale du champ magnétique rémanent en tout point de la périphérie de l'aimant, ledit aimant comprenant :

   - une partie principale (4) de forme annulaire réalisée dans un matériau ferromagnétique dans lequel il est prévu un premier degré D1 d'anisotropie magnétique dans la direction radiale; et
   - une partie renfort (6) de forme annulaire solidaire de ladite partie principale de l'aimant, la partie renfort étant réalisée dans un matériau ferromagnétique présentant la ou les mêmes phases magnétiques principales que celles du matériau ferromagnétique constitutif de la partie principale, et dans lequel il est prévu un second degré D2 d'anisotropie magnétique dans la direction radiale, le premier degré D1 étant supérieur au second degré D2.

2. Aimant selon la revendication 1, **caractérisé en ce que** ladite partie renfort (6) est agencée à la périphérie intérieure ou extérieure de la partie principale (4) de l'aimant.

3. Aimant selon la revendication 2, **caractérisé en ce que** le rapport entre l'épaisseur radiale moyenne de la partie principale (4) et l'épaisseur radiale moyenne de la partie renfort (6) est compris entre 0,1 et 5.

4. Aimant selon l'une quelconque des revendications précédentes, **caractérisé en ce que** le rapport entre le diamètre intérieur et le diamètre extérieur de la partie principale (4) de l'aimant est compris entre 0,5 et 0,85.

5. Aimant selon l'une quelconque des revendications précédentes, **caractérisé en ce que** le matériau ferromagnétique de chacune des parties principale et renfort est pris parmi l'un des trois types de composés suivants :

   - les alliages de R-Fe-B ayant pour phase magnétique principale $R_2Fe_{14}B$ où R est un élément de la famille des terres rares,
   - les alliages de R et Co ayant pour phases magnétiques principales $RCo_5$ et $R_2Co_{17}$ où R est un élément de la famille des terres rares,
   - les hexaferrites ayant pour phase magnétique principale $MFe_{12}O_{19}$ avec M = Ba ou Sr.

6. Aimant selon l'une quelconque des revendications précédentes, **caractérisé en ce que** l'interface (10) entre la partie principale (4) de l'aimant et sa partie renfort (6) est structurée.

7. Aimant selon la revendication 6, **caractérisé en ce que** l'interface (10) présente, le long de celle-ci, des saillies (12) et de creux (14) agencés en alternance.

8. Aimant selon l'une quelconque des revendications précédentes, **caractérisé en ce que** le premier degré D1 d'anisotropie magnétique est supérieur à 0,8 et **en ce que** le second degré D2 est inférieur à 0,8, le rapport entre les deux étant de préférence compris entre 1 et 2.

9. Ensemble d'ébauches (100) pour l'obtention d'un aimant fritté de forme annulaire selon l'une quelconque des revendications précédentes, l'ensemble étant **caractérisé en ce qu'**il comprend :

   - une ébauche de la partie principale (4') de forme annulaire réalisée avec une première poudre de matériau ferromagnétique, au sein de laquelle il est prévu un premier degré D1 d'anisotropie magnétique selon la direction radiale de l'ensemble d'ébauches ; et
   - une ébauche de la partie renfort (6') de forme annulaire adjacente à ladite ébauche de la partie principale (4') de l'aimant, l'ébauche de la partie renfort étant réalisée avec une seconde poudre de matériau ferromagnétique présentant la ou les mêmes phases magnétiques principales que celles du matériau ferromagnétique de la première poudre, et au sein de laquelle il est prévu un second degré D2 d'anisotropie magnétique selon la direction radiale de l'ensemble d'ébauches, le premier degré D1 étant supérieur au second degré D2,

et **en ce que** les première et secondes poudres sont de préférence chacune constituées d'un matériau ferromagnétique pris parmi l'un des trois types de composés suivants :

- les alliages de R-Fe-B ayant pour phase magnétique principale $R_2Fe_{14}B$ où R est un élément de la famille des terres rares,
- les alliages de R et Co ayant pour phases magnétiques principales $RCo_5$ et $R_2Co_{17}$ où R est un élément de la famille des terres rares.
- les hexaferrites ayant pour phase magnétique principale $MFe_{12}O_{19}$ avec M = Ba ou Sr.

10. Procédé de fabrication d'un aimant (1) selon l'une quelconque des revendications précédentes, **caractérisé en ce que** des ébauches de la partie principale et de la partie renfort (4', 6') sont réalisées par une/des technique(s) de mise en forme de poudre, préférentiellement par injection de poudre ou par compression à froid de poudre, et **en ce que** les ébauches sont ensuite densifiées par co-frittage.

11. Procédé selon la revendication 10, **caractérisé en ce que** l'ébauche de la partie renfort (6') et l'ébauche de la partie principale (4') sont réalisées par co-injection, **en ce que** l'ébauche de la partie principale (4') est réalisée à partir d'un premier mélange-maître comprenant une poudre anisotrope P1 dudit matériau ferromagnétique, et **en ce que** l'ébauche de la partie renfort (6') est réalisée à partir d'un second mélange-maître comprenant une poudre isotrope P2 dans un matériau ferromagnétique ayant la ou les mêmes phases magnétiques principales que celles de la poudre anisotrope P1.

12. Procédé selon la revendication 10, **caractérisé en ce que** l'ébauche de la partie renfort (6') et l'ébauche de la partie principale (4') sont réalisées par co-injection, **en ce que** l'ébauche de la partie principale (4') est réalisée à partir d'un premier mélange-maître comprenant une poudre anisotrope P1 dudit matériau ferromagnétique et un premier vecteur d'injection V1, et **en ce que** l'ébauche de la partie renfort (6') est réalisée à partir à partir d'un second mélange-maître comprenant la poudre anisotrope P1, et un second vecteur d'injection V2 choisi de manière à réduire, par rapport au premier vecteur V1, l'aptitude des particules de poudre à orienter leur axe de facile aimantation selon la direction radiale de l'aimant, sous champ magnétique.

13. Procédé selon la revendication 10, **caractérisé en ce que** l'ébauche de la partie renfort (6') et l'ébauche de la partie principale (4') sont réalisées par co-injection, **en ce que** l'ébauche de la partie principale (4') est réalisée à partir d'un premier mélange-maître comprenant une poudre anisotrope P1 dudit matériau ferromagnétique et un premier vecteur d'injection V1, et **en ce que** l'ébauche de la partie renfort (6') est réalisée à partir d'un second mélange-maître comprenant la même poudre anisotrope P1, et le même premier vecteur d'injection V1, le taux de charge Tc1 de poudre dans le premier mélange-maître étant différent du second taux de charge de poudre Tc2 dans le second mélange-maître de manière à réduire dans ce dernier, par rapport au premier mélange-maître, l'aptitude des particules de poudre à orienter leur axe de facile aimantation selon la direction radiale de l'aimant, sous champ magnétique.

14. Procédé selon la revendication 10, **caractérisé en ce que** l'ébauche de la partie renfort (6') est réalisée avant d'être utilisée comme une partie du moule pour la réalisation de l'ébauche de la partie principale (4').

15. Procédé selon la revendication 14, **caractérisé en ce que** l'ébauche de la partie renfort (6') est partiellement frittée avant d'être utilisée comme moule pour la réalisation de l'ébauche de la partie principale.

16. Procédé selon la revendication 15, **caractérisé en ce que** l'ébauche de la partie renfort (6') partiellement frittée est aimantée de façon à permettre l'orientation, selon la direction radiale de l'aimant, de l'axe de facile aimantation des grains de l'ébauche de la partie principale, lors de la réalisation de celle-ci.

**Patentansprüche**

1. Gesinterter Magnet (1) in Ringform, der eine radiale Ausrichtung des remanenten Magnetfeldes an jedem Punkt des Umfangs des Magneten aufweist, wobei der Magnet enthält:

- einen ringförmigen Hauptteil (4), der aus einem ferromagnetischen Material hergestellt ist, in welchen ein erster Grad D1 magnetischer Anisotropie in radialer Richtung vorgesehen ist; und
- einen ringförmigen Verstärkungsteil (6), der fest mit dem Hauptteil des Magneten verbunden ist, wobei der Verstärkungsteil aus einem ferromagnetischen Material hergestellt ist, der die gleiche bzw. die gleichen magnetische(n) Hauptphase(n) aufweist wie das ferromagnetische Material, aus dem der Hauptteil besteht, und wobei ein zweiter Grad D2 magnetischer Anisotropie in radialer Richtung vorgesehen ist, wobei der erste Grad D1 höher als der zweite Grad D2 ist.

2. Magnet nach Anspruch 1, **dadurch gekennzeichnet, dass** der Verstärkungsteil (6) am Innen- oder Außenumfang des Hauptteils (4) des Magneten angeordnet ist.

3. Magnet nach Anspruch 2, **dadurch gekennzeichnet, dass** das Verhältnis zwischen mittlerer radialer Dicke des Hauptteils (4) und mittlerer radialer Dicke des Verstärkungsteils (6) zwischen 0,1 und 5 liegt.

4. Magnet nach einem der vorangehenden Ansprüche, **dadurch gekennzeichnet, dass** das Verhältnis zwischen Innendurchmesser und Außendurchmesser des Hauptteils (4) des Magneten zwischen 0,5 und 0,85 liegt.

5. Magnet nach einem der vorangehenden Ansprüche, **dadurch gekennzeichnet, dass** das ferromagnetische Material eines jeden Teils aus Hauptteil und Verstärkungsteil ausgewählt ist aus einer der drei folgenden Arten von Verbindungen:

- Legierungen aus R-Fe-B mit $R_2Fe_{14}B$ als magnetische Hauptphase, worin R ein Element der Familie der seltenen Erden ist,
- Legierungen aus R und Co mit $RCo_5$ und $R_2Co_{17}$ als magnetische Hauptphasen, worin R ein Element der Familie der seltenen Erden ist,
- Hexaferriten mit $MFe_{12}O_{19}$ als magnetische Hauptphase, mit M = Ba oder Sr.

6. Magnet nach einem der vorangehenden Ansprüche, **dadurch gekennzeichnet, dass** die Schnittstelle (10) zwischen dem Hauptteil (4) des Magneten und seinem Verstärkungsteil (6) strukturiert ist.

7. Magnet nach Anspruch 6, **dadurch gekennzeichnet, dass** die Schnittstelle (10) entlang derselben Vorsprünge (12) und Vertiefungen (14) aufweist, die im Wechsel angeordnet sind.

8. Magnet nach einem der vorangehenden Ansprüche, **dadurch gekennzeichnet, dass** der erste Grad D1 magnetischer Anisotropie höher als 0,8 ist und dass der zweite Grad D2 geringer als 0,8 ist, wobei das Verhältnis zwischen den beiden vorzugsweise zwischen 1 und 2 liegt.

9. Satz von Rohlingen (100) zum Erhalt eines gesinterten Magneten in Ringform nach einem der vorangehenden Ansprüche, wobei der Satz **dadurch gekennzeichnet ist, dass** er enthält:

- einen Rohling für den ringförmigen Hauptteil (4'), der mit einem ersten Pulver aus ferromagnetischem Material hergestellt ist, in welchem ein erster Grad D1 magnetischer Anisotropie in radialer Richtung des Satzes von Rohlingen vorgesehen ist; und
- einen Rohling für den ringförmigen Verstärkungsteil (6'), der an den Rohling des Hauptteils (4') des Magneten angrenzt, wobei der Rohling des Verstärkungsteils mit einem zweiten Pulver aus ferromagnetischem Material hergestellt ist, das die gleiche bzw. die gleichen magnetische(n) Hauptphase(n) aufweist wie das ferromagnetische Material des ersten Pulvers, in welchem ein zweiter Grad D2 magnetischer Anisotropie in radialer Richtung des Satzes von Rohlingen vorgesehen ist, wobei der erste Grad D1 höher als der zweite Grad D2 ist,

und dass das erste und das zweite Pulver vorzugsweise jeweils aus einem ferromagnetischen Material bestehen, das ausgewählt ist aus einer der drei folgenden Arten von Verbindungen:

- Legierungen aus R-Fe-B mit $R_2Fe_{14}B$ als magnetische Hauptphase, worin R ein Element der Familie der seltenen Erden ist,
- Legierungen aus R und Co mit $RCo_5$ und $R_2Co_{17}$ als magnetische Hauptphasen, worin R ein Element der Familie der seltenen Erden ist,

- Hexaferriten mit $MFe_{12}O_{19}$ als magnetische Hauptphase, mit M = Ba oder Sr.

10. Verfahren zum Herstellen eines Magneten (1) nach einem der vorangehenden Ansprüche, **dadurch gekennzeichnet, dass** Rohlinge für den Hauptteil und den Verstärkungsteil (4', 6') mit einer/mehreren Technik(en) zum Umformen von Pulver, insbesondere durch Spritzgießen von Pulver oder durch Kaltpressen von Pulver hergestellt werden, und dass die Rohlinge dann durch Co-Sintern verdichtet werden.

11. Verfahren nach Anspruch 10, **dadurch gekennzeichnet, dass** der Rohling für den Verstärkungsteil (6') und der Rohling für den Hauptteil (4') durch Co-Spritzgießen hergestellt werden, dass der Rohling für den Hauptteil (4') ausgehend von einem ersten Masterbatch mit einem anisotropen Pulver P1 aus dem ferromagnetischen Material hergestellt wird, und dass der Rohling für den Verstärkungsteil (6') ausgehend von einem zweiten Masterbatch mit einem isotropen Pulver P2 aus einem ferromagnetischen Material hergestellt wird, das die gleiche bzw. die gleichen magnetische(n) Hauptphase(n) hat wie das anisotrope Pulver P1.

12. Verfahren nach Anspruch 10, **dadurch gekennzeichnet, dass** der Rohling für den Verstärkungsteil (6') und der Rohling für den Hauptteil (4') durch Co-Spritzgießen hergestellt werden, dass der Rohling für den Hauptteil (4') aus einem ersten Masterbatch mit einem anisotropen Pulver P1 aus dem ferromagnetischen Material und einem ersten Spritzgießvektor V1 hergestellt wird, und dass der Rohling für den Verstärkungsteil (6') ausgehend von einem zweiten Masterbatch mit dem anisotropen Pulver P1 und einem zweiten Spritzgießvektor V2 hergestellt wird, das so gewählt ist, dass gegenüber dem ersten Vektor V1 die Fähigkeit der Pulverteilchen vermindert wird, unter Magnetfeldeinwirkung ihre magnetische Vorzugsachse in der radialen Richtung des Magneten auszurichten.

13. Vorrichtung nach Anspruch 10, **dadurch gekennzeichnet, dass** der Rohling für den Verstärkungsteil (6') und der Rohling für den Hauptteil (4') durch Co-Spritzgießen hergestellt werden, dass der Rohling für den Hauptteil (4') aus einem ersten Masterbatch mit einem anisotropen Pulver P1 aus dem ferromagnetischen Material und einem ersten Spritzgießvektor V1 hergestellt wird, und dass der Rohling für den Verstärkungsteil (6') ausgehend von einem zweiten Masterbatch mit dem gleichen anisotropen Pulver P1 und dem gleichen ersten Spritzgießvektor V1 hergestellt wird, wobei der Füllgrad Tc1 des Pulvers in dem ersten Masterbatch sich von dem zweiten Füllgrad Tc2 des Pulvers in dem zweiten Masterbatch unterscheidet, so dass unter Magnetfeldeinwirkung in dem letzteren die Fähigkeit der Pulverteilchen zum Ausrichten ihrer magnetischen Vorzugsachse in der radialen Richtung des Magneten bezüglich des ersten Masterbatches vermindert wird.

14. Verfahren nach Anspruch 10, **dadurch gekennzeichnet, dass** der Rohling für den Verstärkungsteil (6') hergestellt wird, bevor er als ein Teil der Gießform zum Herstellen des Rohlings für den Hauptteil (4') verwendet wird.

15. Verfahren nach Anspruch 14, **dadurch gekennzeichnet, dass** der Rohling für den Verstärkungsteil (6') teilweise gesintert wird, bevor er als Gießform zum Herstellen des Rohlings für den Hauptteil verwendet wird.

16. Verfahren nach Anspruch 15, **dadurch gekennzeichnet, dass** der teilweise gesinterte Rohling für den Verstärkungsteil (6') magnetisiert wird, so dass er die Ausrichtung der magnetischen Vorzugsachse der Körner des Rohlings für den Hauptteil (4') bei dessen Herstellung in radialer Richtung des Magneten ermöglicht.

## Claims

1. Sintered annular magnet (1) with a radial orientation of the remanent magnetic field at all points around the periphery of the magnet, said magnet comprising:

   - a principal annular part (4) made from a ferromagnetic material that has a first degree D1 of magnetic anisotropy in the radial direction; and
   - an annular reinforcing part (6) fixed to said principal part of the magnet, the reinforcing part being made from a ferromagnetic material with the same principal magnetic phase(s) as the ferromagnetic material forming the principal part, and that has a second degree D2 of magnetic anisotropy in the radial direction, the first degree D1 being higher than the second degree D2.

2. Magnet according to claim 1, **characterised in that** said reinforcing part (6) is arranged at the internal or external periphery of the principal part (4) of the magnet.

3.   Magnet according to claim 2, **characterised in that** the ratio between the average radial thickness of the principal part (4) and the average radial thickness of the reinforcing part (6) is between 0.1 and 5.

4.   Magnet according to any one of the previous claims, **characterised in that** the ratio between the inside diameter and the outside diameter of the principal part (4) of the magnet is between 0.5 and 0.85.

5.   Magnet according to any one of the previous claims, **characterised in that** the ferromagnetic material forming the principal and reinforcing parts is one of the following three types of compounds:

- R-Fe-B alloys with the $R_2Fe_{14}B$ principal magnetic phase where R is an element in the rare earths family;
- R and Co alloys with $RCo_5$ and $R_2Co_{17}$ principal magnetic phases where R is an element in the rare earths family;
- hexaferrites with the $MFe_{12}O_{19}$ principal magnetic phase where M = Ba or Sr.

6.   Magnet according to any one of the previous claims, **characterised in that** the interface (10) between the principal part (4) of the magnet and its reinforcing part (6) is structured.

7.   Magnet according to claim 6, **characterised in that** the interface (10) is provided with projections (12) and recesses (14) arranged alternately along this interface.

8.   Magnet according to any one of the previous claims, **characterised in that** the first degree D1 of magnetic anisotropy is more than 0.8 and **in that** the second degree D2 is less than 0.8, the ratio between the two preferably being between 1 and 2.

9.   Assembly of blanks (100) to obtain an annular sintered magnet according to any of the previous claims, the assembly being **characterised in that** it comprises:

- a blank of the principal annular part (4') made from a first ferromagnetic material powder, that has a first degree D1 of magnetic anisotropy along the radial direction of the assembly of blanks; and
- a blank of the annular reinforcing part (6') adjacent to said blank of the principal part (4') of the magnet, the blank of the reinforcing part being made from a second ferromagnetic material powder with the same principal magnetic phase(s) as the first ferromagnetic material powder, that has a second degree D2 of magnetic anisotropy along the radial direction of the assembly of blanks, the first degree D1 being higher than the degree D2;

and **in that** the ferromagnetic material making up the first and second powders preferably belongs to one of the following three types of compounds:

- R-Fe-B alloys for which the principal magnetic phase is $R_2Fe_{14}B$ where R is an element in the rare earths family;
- R and Co alloys for which the principal magnetic phases are $RCo_5$ and $R_2Co_{17}$ where R is an element in the rare earths family.
- hexaferrites for which the principal magnetic phase is $MFe_{12}O_{19}$ where M = Ba or Sr.

10.  Method of manufacturing a magnet (1) according to any one of the previous claims, **characterised in that** the blanks of the principal part and of the reinforcing part (4', 6') are made using one or more powder forming technique(s), preferably by powder injection or by powder cold pressing, and **in that** blanks are then are densified by co-sintering.

11.  Method according to claim 10, **characterised in that** the blank of the reinforcing part (6') and the blank of the principal part (4') are made by co-injection, **in that** the blank of the principal part (4') is made from a first feedstock comprising an anisotropic powder P1 of said ferromagnetic material, and **in that** the blank of the reinforcing part (6') is made from a second feedstock comprising an isotropic powder P2 of a ferromagnetic material with the same principal magnetic phase(s) as the anisotropic powder P1.

12.  Method according to claim 10, **characterised in that** the blank of the reinforcing part (6') and the blank of the principal part (4') are made by co-injection, **in that** the blank of the principal part (4') is made from a first feedstock comprising an anisotropic powder P1 of said ferromagnetic material and a first injection vector V1, and **in that** the blank of the reinforcing part (6') is made from a second feedstock comprising the anisotropic powder P1, and a second injection vector or V2 chosen such that the aptitude of powder particles to orient their axis of easy magnetization along the radial direction of the magnet under a magnetic field is less than the aptitude of the first vector V1.

**13.** Method according to claim 10. **characterised in that** the blank of the reinforcing part (6') and the blank of the principal part (4') are made by co-injection, **in that** the blank of the principal part (4') is made from a first feedstock comprising an anisotropic powder P1 of said ferromagnetic material and a first injection vector V1, and **in that** the blank of the reinforcing part (6') is made from a second feedstock comprising the same anisotropic powder P1, and the same first injection vector V1, the powder content ratio Tc1 in the first feedstock being different from the second powder content ratio Tc2 in the second feedstock such that the aptitude of powder particles to orient their axis of easy magnetization along the radial direction of the magnet under a magnetic field is less than the aptitude of the first feedstock.

**14.** Method according to claim 10, **characterised in that** the blank of the reinforcing part (6') is made before being used as part of the mould to make the blank of the principal part (4').

**15.** Method according to claim 14, **characterised in that** the blank of the reinforcing part (6') is partially sintered before being used as a mould for manufacturing the blank of the principal part.

**16.** Method according to claim 15, **characterised in that** the blank of the partially sintered reinforcing part (6') is magnetised so as to orient the axis of easy magnetization of the grains of the blank of the principal part along the radial direction of the magnet, when the principal part is manufactured.

FIG. 1

FIG. 2

FIG. 3

FIG. 3a

FIG. 4a

FIG. 4b

FIG. 4c

FIG. 4d

FIG. 5a

FIG. 5b

FIG. 5c

FIG. 5d

FIG. 5e

FIG. 6a

FIG. 6b

FIG. 6c

FIG. 6d

FIG. 6e

FIG. 6f

32

20

100

22

+

## FIG. 6g

50

16'

22'

P1

22'

18'

+

## FIG. 7a

6'

+

## FIG. 7b

FIG. 7c

FIG. 7d

FIG. 7e

## RÉFÉRENCES CITÉES DANS LA DESCRIPTION

**Documents brevets cités dans la description**

- EP 0719745 B1
- EP 1548761 A1
- JP 2000150217 A
- JP 7161512 A
- JP 11054352 A
- DE 202005019268 U1
- US 2005034788 A1
- WO 9414175 A1

**Littérature non-brevet citée dans la description**

- Cracking of Radially Oriented Rings During Firing. *Science of Ceramics,* 1973, vol. 7, 29-44